(19) **Europäisches Patentamt / European Patent Office / Office européen des brevets**

(11) **EP 1 237 435 B1**

(12) **EUROPÄISCHE PATENTSCHRIFT**

(45) Veröffentlichungstag und Bekanntmachung des Hinweises auf die Patenterteilung:
**13.01.2010 Patentblatt 2010/02**

(21) Anmeldenummer: **01901160.0**

(22) Anmeldetag: **18.01.2001**

(51) Int Cl.:
***A44C 21/00*** *(2006.01)*

(86) Internationale Anmeldenummer:
**PCT/EP2001/000517**

(87) Internationale Veröffentlichungsnummer:
**WO 2001/052685 (26.07.2001 Gazette 2001/30)**

(54) **COIN HAVING DIFFRACTION STRUCTURES**

COIN PROVIDED WITH DIFFRACTION STRUCTURES

PIECE DE MONNAIE A STRUCTURES DE DIFFRACTION

(84) Benannte Vertragsstaaten:
**AT BE CH CY DE DK ES FI FR GB GR IE IT LI LU MC NL PT SE TR**

(30) Priorität: **21.01.2000 DE 10002644**

(43) Veröffentlichungstag der Anmeldung:
**11.09.2002 Patentblatt 2002/37**

(73) Patentinhaber: **OVD Kinegram AG**
**6301 Zug (CH)**

(72) Erfinder:
• **TOMPKIN, Wayne, Robert**
**CH-5400 Baden (CH)**

• **STAUB, René**
**CH-6332 Hagendorn (CH)**
• **HASLER, Andreas**
**CH-7000 Chur (CH)**
• **JÜTZ, Jakob**
**CH-9472 Grabs (CH)**
• **MÜLLER, Martin**
**CH-7260 Davos-Dorf (CH)**

(74) Vertreter: **LOUIS, PÖHLAU, LOHRENTZ**
**Postfach 3055**
**90014 Nürnberg (DE)**

(56) Entgegenhaltungen:
**US-A- 4 108 367    US-A- 4 250 393**
**US-A- 5 046 841    US-A- 5 101 184**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Münze mit Sicherheitselementen gemäss dem Oberbegriff des Anspruchs 1, einen Münzprüfer zur Prüfung der Echtheit solcher Münzen gemäss dem Oberbegriff des Anspruchs 9 und ein Verfahren zur Herstellung solcher Münzen gemäss dem Oberbegriff der Anspruchs 11.

Solche Münzen eignen sich als besonders fälschungssichere Zahlungsmittel. Es ist bekannt, dass Münzen mit makroskopischen Reliefs leicht fälschbar sind und dass elektronische Münzprüfer, die die geometrischen und metallischen Eigenschaften von Münzen prüfen, mit nachgemachten Münzen oder Münzen anderer Länder zu täuschen sind.

Aus der US-5'216'234 sind münzenähnliche Rondellen ("Token") bekannt. Auf einem Kreisring um den Mittelpunkt der Rondelle sind in die Oberfläche derselben verschieden geneigte Spiegelflächen eingeprägt, die einen Kode bilden. Die Spiegelflächen reflektieren einfallendes Licht in unterschiedlichen, vorbestimmten Richtungen. Das reflektierte Licht wird in einem Lesegerät mittels Photodetektoren analysiert und die echten Rondellen erkannt.

Die US-5'046'841 beschreibt eine aus Plastik gegossene Scheibe, die punktsymmetrisch zum Mittelpunkt der Scheibe angeordnete Kreisringe aufweist. In jedem Kreisring weist die Oberfläche vorbestimmte optische Eigenschaften auf, wie Brechen oder Reflektieren oder Beugen von Licht. Eine Kombination der Kreisringe mit unterschiedlichen Oberflächeneigenschaften bildet einen Kode, der eine optisch maschinelle Erkennung der Rondelle ermöglicht. Anstelle der Einteilung in Kreisringe kann die Einteilung auch in Kreisringsegmente mit unterschiedlichen Oberflächeneigenschaften erfolgen.

Die US 4,108,367 beschreibt ein optisches Lesegerät für Wertkarten mit in eine Kunststoffoberfläche eingeprägten optischen Markierungen. Die optischen Markierungen, die Werteinheiten darstellen, bestehen aus Paaren von Beugungsgittern. In jedem Paar unterscheiden sich die beiden Beugungsgitter wenigstens in der Orientierung. Beim Abbuchen einer Werteinheit wird mittels einer Stanzvorrichtung eine der Markierungen aus der Wertkarte geschnitten.

Sicherheitselemente mit einem Flächenmuster nach US 5,101,184 weisen ein Mosaik aus Flächenelementen mit Beugungsgittern auf. In das Flächenmuster ist eine Echtheitsinformation mittels der Beugungsgitter mit asymmetrischen Reliefprofilen integriert. Die Echtheitsinformation besteht aus jeweils zwei benachbarten Flächenelementen, die mit einem asymmetrischen Beugungsgitter derart belegt sind, dass in den beiden benachbarten Flächenelementen die asymmetrischen Reliefprofile gespiegelt sind. In den beiden Flächenelementen unterscheiden sich die beiden asymmetrischen Beugungsgitter nur durch die entgegengesetzt gerichteten Gittervektoren. Die Echtheitsinformation ist visuell schwer im Flächenmuster zu entdecken, ist aber mit optischen Mitteln maschinell sicher auszulesen.

Zudem beschreibt das Gebrauchsmuster DE-G 92 04 029.2 ein scheibenförmiges Pfand-Chip aus Kunststoff. Diese Scheiben tragen auf wenigstens einer Scheibenfläche ein visuell erkennbares, dekoratives Hologramm, so dass sich das Pfand-Chip auch als Werbeträger eignet. Das Hologramm ist auf der Scheibenfläche angebracht.

Schliesslich sind in Research Disclosure No. 374'031 (1995; Kenneth Mason Publications Ltd.) metallische Münzen mit einem diffraktiven Sicherheitselement bekannt. Das Sicherheitselement ist beispielsweise ein in einer Vertiefung der Oberfläche aufgeklebtes Folienstück mit einer diffraktiven Beugungsstruktur. Das Sicherheitselement kann auch direkt in die metallische Oberfläche eingeprägt sein. Ein solches Produkt aus Feingold ist unter dem Warenzeichen KINEBAR® erhältlich. Als diffraktive Beugungsstrukturen sind z.B. eine Hologrammstruktur, ein in der CH-653'782 beschriebenes Kinoform, oder ein OVD ("optically variable device") gemäss der EP-0'105'099 B1 verwendbar. Die diffraktiven Sicherheitselemente sind ein Zeichen der Echtheit des Produkts und ermöglichen in einer in der EP-0'366'858 A1 beschriebenen Ausgestaltung eine optisch maschinelle Erkennung der Münzen.

Der Erfindung liegt die Aufgabe zugrunde, eine Münze kostengünstig mit einem schwer fälschbaren und einfach zu überprüfenden Sicherheitsmerkmal zu versehen, ein Verfahren zum Aufbringen einer mikroskopisch feinen, diffraktiven Reliefstruktur in eine harte Materialoberfläche zur Herstellung einer solchen Münze anzugeben und eine kompakte, kostengünstige Vorrichtung zur Prüfung der Echtheit solcher Münzen zu verwirklichen, die sich zur Nachrüstung bestehender Münzprüfer eignet.

Die genannte Aufgabe wird erfindungsgemäss gelöst durch die Merkmale der Ansprüche 1, 9 und 11.

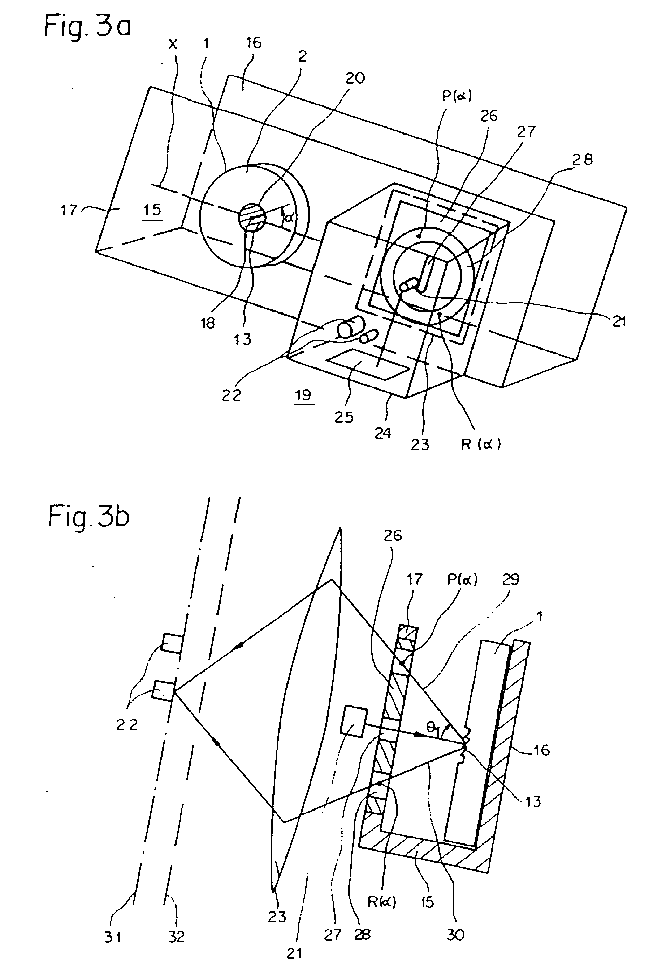

Ausführungen, die sich auf die Zeichnungen der Figuren 3a, 3b, 4, 5a, 5b, 6a und 6b stützen, fallen nicht in den Bereich der abhängigen Ansprüche.

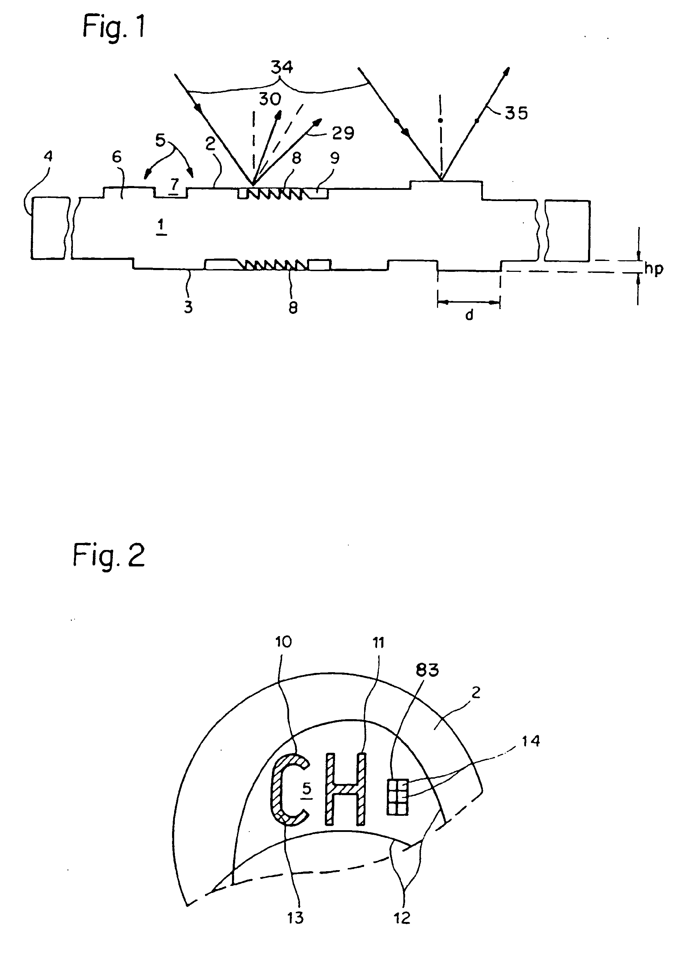

Nachfolgend werden Ausführungsbeispiele der Erfindung anhand der Zeichnung der Figuren 1, 2, 7a, 7b, 8, 9, und 10 näher erläutert.

Es zeigen:

| | |
|---|---|
| Fig. 1 | eine Münze im Querschnitt, |
| Fig. 2 | einen Ausschnitt der Münze in der Draufsicht, |
| Fig. 3a, b | einen Abschnitt eines Münzkanals mit einem optischen Lesegerät und der Münze, |
| Fig. 4 | das Lesegerät in einer Ausführung mit einem diffraktiven optischen Element, |
| Fig. 5a, b | die mit einer Codierung versehene Münze und die Lage der die Codierung darstellenden Gitter in einer schlitzförmigen Öffnung im Lesegerät, |
| Fig. 6a, b | ein weiteres optisches Lesegerät, |
| Fig. 7a, b | die Münzen mit Anordnungen von Feldern |

| Fig. 8 | einen Querschnitt durch eine weitere Ausführung des Lesegeräts, |
| Fig. 9 | eine erste Einrichtung zur Herstellung einer mikroskopischen Reliefstruktur und |
| Fig. 10 | eine zweite Einrichtung zur Herstellung der mikroskopischen Reliefstruktur. |

Die Fig. 1 zeigt in nicht massstäblicher Zeichnung eine Münze 1 im Querschnitt. Die Münze 1 weist zwei annähernd parallele Oberflächen 2, 3 und eine Randfläche 4 auf. Die Oberflächen 2, 3 sind mit makroskopischen Reliefs 5 versehen, die Erhebungen 6 und Vertiefungen 7 bilden. In dem zu den Oberflächen 2, 3 parallelen Boden von wenigstens einer Vertiefung 7 sind mikroskopische, beugungswirksame Reliefstrukturen 8 eingeformt. Die makroskopischen Reliefs 5 stellen bildliche Motive dar, die erstens Auskunft über die Herkunft und den Wert der Münze geben und zweitens als visuelles Echtheitsmerkmal dienen. Ihre typischen Strukturabmessungen wie Breite d und Profilhöhe $h_P$ liegen im Millimeter- und Zehntelmillimeterbereich. Sie sind so ausgestaltet, dass sie auftreffende Lichtstrahlen 34 teilweise reflektieren als Strahlenbündel 35 und/oder diffus streuen. Das Profil des makroskopischen Reliefs 5 ist in der Zeichnung der Fig. 1 aus darstellerischen Gründen rechteckförmig gezeichnet. In Wirklichkeit ist das Profil des Reliefs 5 durch das bildliche Motiv bestimmt und weist wenigstens abgerundete Kanten auf. Ebenfalls nicht dargestellt ist ein bei vielen Münzsorten vorhandener, aufgestauchter Randwulst zum Schutz des Münzbildes. Die mikroskopischen Reliefstrukturen 8 weisen hingegen wesentlich kleinere Strukturabmessungen auf, deren Parameter Linienabstand und Profilhöhe typisch im Bereich von Mikrometern bzw. Zehntelmikrometem liegen. Sie beugen die auftreffenden Lichtstrahlen 34 in Teilstrahlen 29, 30 mit vorbestimmten Richtungen. Mit Vorteil sind die Reliefstrukturen 8 für eine maschinelle Überprüfung der Echtheit der Münze 1 ausgelegt. Die vertiefte Anordnung schützt die mikroskopischen Reliefstrukturen 8 vor Beschädigungen und gegen Abnutzungserscheinungen. Um zu vermeiden, dass sich beim Gebrauch die Furchen der Reliefstruktur 8 mit Schmutzpartikeln füllen, die die Beugungseigenschaften verändern oder zum Verschwinden bringen könnten, ist die Reliefstruktur 8 mit Vorteil mit einem transparenten Schutzlack 9 auf Kunstharzbasis bedeckt. Mit Vorteil wird ein von Lösungsmitteln freier, z.B. mit ultraviolettem Licht härtbarer Schutzlack verwendet.

Die Fig. 2 zeigt einen Teil der Münze 1 in der Draufsicht auf die Oberfläche 2. Die Oberfläche 2 enthält vertiefte Flächen 10, 11, die in der Zeichnung der Fig. 2 die Umrisse der Buchstaben "C" und "H" darstellen. Die Flächen 10, 11 sind Teil des makroskopischen Reliefs 5. Die Flächen 10, 11 enthalten die mikroskopische Reliefstruktur 8 (Fig. 1) in der Form von Gittern 13. Das Relief 5 stellt zusammen mit der Reliefstruktur 8 ein vorzugsweise visuell überprüfbares Sicherheitsmerkmal dar, da die Gitter 13 unter normalen Beleuchtungsverhältnissen sichtbare beugungsoptische Effekte bewirken. Zudem ist die Reliefstruktur 8 auch maschinenlesbar. Für die maschinelle Überprüfung unter Verwendung infraroter Strahlung genügt an sich eine Linienzahl von 200 - 300 Linien pro Millimeter. Falls aber die Reliefstruktur 8 auch gut sichtbare visuelle Beugungseffekte erzeugen soll, wird eine Linienzahl von typisch 800 Linien pro Millimeter bevorzugt. Die Linienzahl kann jedoch irgendwo zwischen 50 und 3000 Linien pro Millimeter liegen. Die Münze 1 enthält in einer Ausführung Guillochen 12 von weniger als 0,2 mm Breite mit Reliefstrukturen 8, die bei einer Bewegung der Münze 1 oder beim Rollen auf der Randfläche 4 wechselnde optische Effekte erzeugen, wie sie aus der eingangs erwähnten EP 105 099 B1 bekannt sind.

Neben der in der Fig. 1 beispielhaft dargestellten, sägezahnförmigen asymmetrischen Reliefstruktur 8 sind auch symmetrische oder asymmetrische Profilformen bekannter periodischer Funktionen für die Reliefstruktur 8 der Gitter 13 verwendbar. Die Verwendung einer asymmetrischen Reliefstruktur 8 wird bevorzugt, da sie den Vorteil bietet, dass die Echtheit der Münze 1 aufgrund der unterschiedlichen Intensitäten der in die plus erste und in die minus erste Beugungsordnung gebeugten Teilstrahlen 29, 30 beurteilbar ist, weil bei den asymmetrischen Profilformen die Intensität des in die plus erste Beugungsordnung gebeugten Teilstrahls 29 grösser als die Intensität des in die minus erste Beugungsordnung gebeugten Teilstrahls 30 ist. Eine Überlagerung mehrerer, z.B. aus der WO 99/38039 bekannter Gitterstrukturen erzeugen auch die Teilstrahlen 29, 30 mit unterschiedlichen Intensitäten.

Bevorzugt weist die Münze 1 in der Fig. 2 zudem eine Anzahl N nebeneinander angeordneter Felder 14 mit den weiteren Reliefstrukturen 8 auf, die aus einem Set von M verschiedenen vorbestimmten Gittern 13 ausgewählt sind, so dass bei der maschinellen Überprüfung der Münze 1 mit optischen Lesegeräten, wie sie nachfolgend beschrieben sind, eine ganze Vielzahl von bis zu 2•N gebeugten Teilstrahlen der ersten Beugungsordnung erzeugt wird. Verschiedene Münzen 1 lassen sich so nach Land und Wert codieren, indem jedem Land und jedem Münzwert in den Feldern 14 eine Kennung in Form einer Kombination von vorbestimmten Gittern 13 zugeordnet wird. Beispielsweise ist die Anzahl N der Felder 14 gleich zwölf, wovon die ersten acht Felder 14 acht Bits darstellen, die als Ländercode dienen, und wovon die letzten vier Felder 14 vier Bits zur Codierung des Wertes darstellen. Bei der maschinellen Prüfung der Echtheit der Münze sind somit auch deren Herkunft und Wert erfassbar.

Die bekannten Münzen 1, wie sie von den Nationalbanken vieler Staaten in Umlauf gesetzt sind, sind rund. Münzprüfer, die zur maschinellen Überprüfung der Echtheit von Münzen 1 eingerichtet sind und beispielsweise in Telefonen, Verkaufsautomaten, etc. Verwendung finden, weisen in der Regel einen Münzkanal auf, in dem die zu prüfende Münze 1 hinabrollt oder gleitet, wobei sie entlang einer geneigten Bahn optische Lesegeräte und/oder magnetische Sensoren passiert. Bei Münzprüfem, die eine sehr grosse Menge von Münzen 1 in kurzer Zeit überprüfen müssen und die z.B. von Banken verwendet werden, rollen die Münzen 1 nicht entlang eines Münzkanals, sondern werden von einer weiter nicht beschriebenen Transporteinrichtung, im folgenden ebenfalls Münzkanal genannt, transportiert.

Falls beide Oberflächen 2, 3 der Münze 1 die gleiche mikroskopische Reliefstruktur 8 enthalten, genügt es, dass der Münzprüfer nur eine der Oberflächen 2, 3 überprüft. Falls die Münze 1 nur auf der einen Oberfläche 2 bzw. 3 mit der mikroskopischen Reliefstruktur 8 versehen ist, vereinfacht sich die Herstellung der Münzen 1. Der Münzprüfer muss dann jedoch zur optischen Überprüfung beider Oberflächen 2, 3 eingerichtet sein.

Im folgenden sind nun Beispiele von Münzen 1 und optischen Lesegeräten beschrieben, bei denen die mikroskopischen Reliefstrukturen 8 der Münze 1 und das optische Lesegerät aufeinander abgestimmt sind. Die Reliefstrukturen 8 dienen in jedem Fall wenigstens als maschinell überprüfbares, schwer fälschbares Echtheitsmerkmal. In einer Ausführungform enthalten die Reliefstrukturen 8 weiter eine maschinenlesbare Codierung mit zusätzlichen Informationen, z.B. über Herkunft und Wert der Münze 1, die vom optischen Lesegerät zu erkennen sind. Gemäss eines weiteren Erfindungsgedankens stellen die Münze 1 und das optische Lesegerät ein gemeinsames optisches System dar, da in der Regel die Münzen 1 nur mit dem dafür vorbestimmten Lesegerättyp erkannt werden. Die Reliefstrukturen 8 üben optische Funktionen in dem Sinne aus, dass sich die Münze 1 im Strahlengang des Lesegerätes wie ein diffraktives optisches Element verhält, das den Leselichtstrahl 34 (Fig. 1) entsprechend der in den Reliefstrukturen 8 codierten Information direkt auf einen Satz von vorbestimmten Photodetektoren im Lesegerät abbildet.

Die Fig. 3a und 3b zeigen einen Abschnitt eines Münzkanals 15 eines Münzprüfers. Der Münzkanal 15 ist gegenüber der Vertikalen sowohl in Laufrichtung der Münze 1 (Fig. 3a) als auch in dazu senkrechter Richtung (Fig. 3b) geneigt, so dass die Münze 1 auf einer hinteren Seitenwand 16 des Münzkanals 15 aufliegend hinabrollt und/oder gleitet. In eine vordere Seitenwand 17 des Münzkanals 15 ist ein optisches Lesegerät 19 (Fig. 3a) eingepasst, wobei die Seitenwand 17 zugleich als vordere Gehäusewand des Lesegerätes 19 dient.

Das Lesegerät 19 der Fig. 3a ist geeignet zum maschinellen Nachweis der Echtheit von Münzen 1, die auf einer den Mittelpunkt 18 umgebenden Teilfläche 20 der Oberfläche 2 bzw. 3 (Fig. 1) die mikroskopischen Reliefstrukturen 8 (Fig. 1) in der Form des einzigen Gitters 13 mit geraden Furchen enthalten. Die Lage der Furchen bezüglich der durch die Laufrichtung der Münze 1 definierten Richtung ist durch einen Winkel $\alpha$ beschreibbar. Beim Rollen der Münze 1 entlang des Münzkanals 15 ändert sich der Winkel $\alpha$ kontinuierlich. Der Mittelpunkt 18 der Münze 1 bewegt sich entlang einer Geraden x, während sich die anderen Punkte der Münze 1 entlang von Zykloiden bewegen. Die Berandung der Teilfläche 20 kann eine beliebige Form aufweisen. Zudem kann die Teilfläche 20 aus nicht zusammenhängenden Gebieten gebildet sein. Das makroskopische Relief 5 (Fig. 1) der Münze 1 ist nicht dargestellt.

Das Lesegerät 19 umfasst eine Lichtquelle 21, z.B. eine Leuchtdiode oder eine Laserdiode, Photodetektoren 22, ein optisches Element 23, ein Gehäuseteil 24 sowie eine elektronische Schaltung 25 zur Steuerung der Lichtquelle 21 und zur Auswertung der von den Photodetektoren 22 gelieferten Signale. In der vorderen Seitenwand 17 ist ein als Maske 26 dienendes Plättchen mit einer ersten Öffnung 27 und weiteren Öffnungen 28 eingelassen. Die Lichtquelle 21 beleuchtet durch die Öffnung 27 hindurch die Teilfläche 20 während des Durchganges der Münze 1 mit annähernd monochromatischem Licht der Wellenlänge $\lambda$. Die Öffnung 27 ist vorzugsweise schlitzförmig, so dass der auf die Münze 1 fallende Lichtfleck ein schmaler Streifen ist, dessen Breite etwas grösser als die grösste Dimension der Teilfläche 20 ist und dessen Länge so bestimmt ist, dass die Teilfläche 20 der zu prüfenden Münzen 1 aller gewünschten Sorten beim Durchgang ausgeleuchtet ist. Das in der Teilfläche 20 vorhandene Gitter 13 reflektiert einen Teil des auftreffenden Lichtes als nullte Beugungsordnung zurück. Das übrige Licht wird, der Spatialfrequenz f des Gitters 13 entsprechend, in den Teilstrahlen 29 (Fig. 3b), 30 (Fig. 3b) unter einem vorbestimmten Winkel $\theta_1$ (Fig. 3b) in die plus erste und in die minus erste Beugungsordnung reflektiert und eventuell auch unter anderen Winkeln in höhere Beugungsordnungen gebeugt. Die Teilstrahlen 29, 30 passieren zwei Punkte $P(\alpha)$ und $R(\alpha)$ auf der Maske 26. Die Lage der Punkte $P(\alpha)$ und $R(\alpha)$ für eine einzelne Münze 1 ist durch den Momentanwert des Winkels $\alpha$ während der Beleuchtung der Teilfläche 20 durch die Lichtquelle 21 gegeben. Die Gesamtheit der für eine einzelne Münzensorte möglichen Punkte $P(\alpha)$ und $R(\alpha)$ liegt auf einer geschlossenen Bahnkurve. Jede der Öffnungen 28 weist den Verlauf der einer zugeordneten Münzsorte angepassten Bahnkurve auf. Dank der Maske 26 gelangt nur an der Münze 1 gebeugtes Licht auf die Photodetektoren 22, während Fremdlicht und Streulicht zum grössten Teil ausgefiltert wird. Der Übersichtlichkeit wegen sind nur die Münze 1 einer einzigen Sorte und nur eine einzige Öffnung 28 gezeichnet. Mittels eines nicht gezeichneten optischen Systems kann der von der Lichtquelle 21 abgegebene Strahl so geführt werden, dass die Öffnung 27 unter Ausnutzung der gesamten Lichtenergie optimal ausgeleuchtet ist.

Das optische Element 23 sorgt dafür, dass wenigstens ein Teil des Lichtes der Teilstrahlen 29, 30 auf die Photodetektoren 22 gelangt. Das optische Element 23 ist in einer Ausführung eine Diffusorscheibe, die beim Durchgang das auftreffende Licht der Teilstrahlen 29; 30 diffus streut. Somit gelangt immer ein Teil des an der Münze 1 gebeugten Lichtes auf den einzigen, entsprechend angeordneten Photodetektor 22. Die elektronische Schaltung 25 gibt ein die Echtheit der Münze 1 anzeigendes Signal ab, falls die vom Photodetektor 22 gemessene Intensität der Teilstrahlen 29; 30 einen vorbestimmten Schwellwert übersteigt. In diesem Fall dient also die mikroskopische Reliefstruktur 8 einzig als Echtheitsmerkmal.

In einer Ausführung des Lesegeräts ist den Photodetektoren 22 ein nicht gezeichnetes optisches Filter zur Erhöhung des Signal-Rausch-Abstandes vorgeschaltet, das nur für Licht der vorbestimmten Wellenlänge $\lambda$ durchlässig ist. Das Gehäuseteil 24 verhindert, dass von aussen störendes Fremdlicht auf den Photodetektor 22 fällt.

Das optische Element 23 kann wie in der Fig. 3b auch eine Linse sein, die die der Lichtquelle 21 zugewandte Oberfläche 2 (Fig. 3a) der Münze 1 in eine Bildebene 31 abbildet. Die Photodetektoren 22 sind nun so angeordnet, dass die Teilfläche 20 einer ersten Münzsorte auf den ersten Photodetektor 22, die Teilfläche 20 einer zweiten Münzsorte mit einem anderen Münzdurchmesser auf den zweiten Photodetektor 22, etc. abgebildet wird. Die Information über die Münzsorte ist somit aus der Nummer des ein positives Echtheitssignal liefernden Photodetektors 22 ableitbar.

Zurück zur Fig. 3a: Die Verwendung von nacheinander oder simultan auf die Münze 1 einfallenden Lichtstrahlen 34 (Fig. 1) mit unterschiedlichen Wellenlängen $\lambda$ erhöht die Zuverlässigkeit der Münzprüfung erheblich. In einer Ausführung der lichtquelle 21 ist eine Leuchtdiode eingesetzt, die bei entsprechender Ansteuerung Lichtstrahlen 34 einer ersten Wellenlänge $\lambda_1$ oder Lichtstrahlen 34 einer zweiten, unterschiedlichen Wellenlänge $\lambda_2$ aussendet (sogenannte dual colour LED oder three colour LED). In einer alternativen Ausführung umfasst die Lichtquelle 21 zwei Laserdioden, die Licht der Wellenlängen $\lambda_1$ bzw. $\lambda_2$ aussenden. Die Lichtquelle 21 wird so betrieben, dass sie zeitlich nacheinander Licht der Wellenlänge $\lambda_1$ bzw. $\lambda_2$ aussendet. Die elektronische Schaltung 25 gibt nur ein Echtheitssignal ab, wenn das Verhältnis der vom entsprechenden Photodetektor 22 gemessenen, den Wellenlängen $\lambda_1$ bzw. $\lambda_2$ zugeordneten Intensitäten innerhalb vorbestimmter Toleranzwerte liegt. Da die Richtung des gebeugten Lichtes sehr empfindlich von der Wellenlänge $\lambda$ abhängt, können durch Kratzer oder Staub verursachte Fehler reduziert werden. Die Münze 1 ist nur dann echt, wenn der Photodetektor 22 Licht beider Wellenlängen $\lambda_1$ bzw. $\lambda_2$ feststellt. Zudem ist das Intensitätsverhältnis der Teilstrahlen 29, 30 der Wellenlänge $\lambda_1$ zu den Teilstrahlen 29, 30 der Wellenlänge $\lambda_2$ unabhängig von der absoluten Lichtleistung, die die Lichtquelle 21 abgibt. Die Verwendung von zwei verschiedenen Wellenlängen $\lambda_1$ bzw. $\lambda_2$ bietet zudem den Vorteil, dass das beugungswirksame Gitter 13 nicht in betrügerischer Absicht durch eine reflektierende Struktur ersetzt werden kann.

Anstelle des Gitters 13 mit geraden Furchen kann auch ein Gitter 13 mit kreisförmigen, zum Mittelpunkt 18 der Münze 1 konzentrischen Furchen verwendet werden. Dies führt zu einer vom Winkel $\alpha$ unabhängigen, gleichmässigen Beleuchtung der entsprechenden Öffnung 28.

In der hinteren Seitenwand 16 des Münzkanals 15 ist mit Vorteil eine weitere Beugungsstruktur angebracht, die bei der Beleuchtung mit dem Lichtstrahl 34 der Lichtquelle 21 in Abwesenheit der Münze 1 Licht auf die Photodetektoren 22 beugt. Auf diese Weise sind die Lichtleistung der Lichtquelle 21 und die Empfindlichkeit der Photodetektoren 22 jederzeit zu überprüfen. Das Prüfergebnis ist bei der Auswertung der Signale mit Vorteil zu berücksichtigen.

Falls, wie in der Fig. 3b gezeigt, das Gitter 13 der Münze 1 eine lineare asymmetrische Profilform aufweist, sind die Photodetektoren 22 mit Vorteil in einer Ebene 32 ausserhalb der Bildebene 31 angeordnet, wo die Teilstrahlen 29 und 30 räumlich getrennt sind. Da der Winkel $\alpha$ der Gitterfurchen statistisch völlig unbestimmt ist, liegt der Schnittpunkt der Teilstrahlen 29 und 30 mit der Ebene 32 irgendwo auf einem Kreisring, dessen Zentrum auf der optischen Achse der Linse 23 liegt. Anstelle mehrerer diskreter Photodetektoren 22 ist bevorzugt ein in verschiedene lichtempfindliche Sektoren unterteilter Photodetektor 22 vorgesehen. Form und Abmessungen der Sektoren des Photodetektors 22 sind so vorbestimmt, dass der Teilstrahl 29 und der Teilstrahl 30 unabhängig vom Winkel $\alpha$ auf verschiedene Sektoren auftreffen. Beim Durchgang der Münze 1 einer ersten Münzsorte liefern ein erster Sektor und ein zweiter Sektor ein über dem Schwellwert liegendes Signal, beim Durchgang der Münze 1 einer zweiten Münzsorte liefern ein dritter Sektor und ein vierter Sektor ein über dem Schwellwert liegendes Signal. Die elektronische Schaltung 25 ist nun eingerichtet zu prüfen, ob zwei verschiedene, einer Münzsorte zugeordnete Sektoren gleichzeitig ein über dem Schwellwert liegendes Signal liefern und ob gegebenenfalls diese Signale ein vorbestimmtes Verhältnis aufweisen. Somit lässt sich die Echtheit der Münze 1 aufgrund des durch die asymmetrische Profilform der Reliefstrukturen 8 (Fig. 1) bedingten Intensitätsverhältnisses der Teilstrahlen 29, 30 verifizieren, was die Sicherheit gegenüber Fälschungen weiter erhöht. In einer anderen Ausführung des Lesegeräts 19 ist anstelle des in lichtempfindliche Sektoren unterteilten Photodetektors 22 mit Vorteil ein zweidimensionaler "Charge Coupled Device (= CCD-Device)" eingesetzt, wie sie z.B. aus digitalen Photokameras oder Camcordern bekannt sind.

Anstelle eines einzigen Gitters 13 können auf der Münze 1 auch mehrere nebeneinander angeordnete oder überlagerte Gitter 13 vorhanden sein, die jeweils um einen Winkel 360°/k verdreht sind, wobei k die Zahl der überlagerten Gitter 13 bezeichnet. Dadurch kann die vom Photodetektor 22 abzudeckende Fläche verkleinert werden.

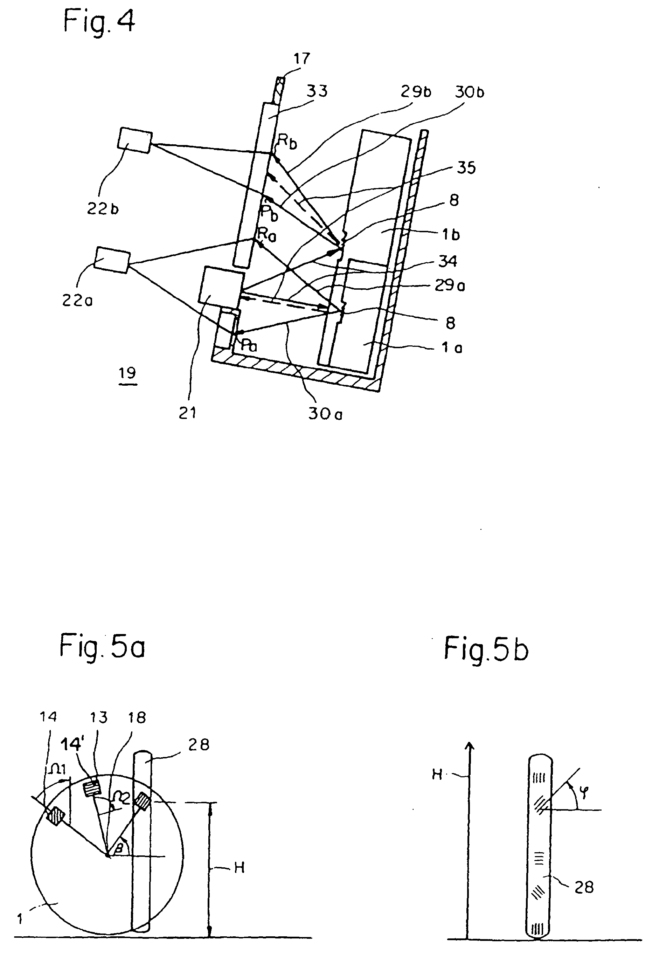

Die Fig. 4 zeigt das Lesegerät 19 in einer Ausführung zum Prüfen von Münzen 1, die verschiedene Durchmesser aufweisen. Das Lesegerät enthält anstelle der Maske 26 (Fig. 3b) und der Linse 23 (Fig. 3b) ein einziges, diffraktives optisches Element 33, das die Funktionen der Maske 26 (Fig. 3b) und der Linse 23 (Fig. 3b) ausübt. Das Element 33 ist entweder bündig in die vordere Seitenwand 17 integriert oder zwischen der vorderen Seitenwand 17 und den Photodetektoren 22 angeordnet. Das diffraktive optische Element 33 ist beispielsweise ein holographisches optisches Element, ein computergeneriertes Hologramm, ein Volumenhologramm, etc. Das Element 33 dient der Umlenkung und Fokussierung der von der Münze 1 ausgehenden Teilstrahlen 29, 30 auf die Photodetektoren 22, wobei die gebeugten Teilstrahlen 29, 30 von Münzen 1 verschiedener Sorten auf verschiedene Photodetektoren 22 fokussiert werden.

Dargestellt sind zwei Münzen 1a und 1b mit verschiedenem Durchmesser. Der von der Lichtquelle 21 ausgehende Lichtstahl 34 fällt unter einem dem Durchmesser der Münzen 1 entsprechenden Winkel schräg auf die Reliefstruktur 8 der Münze 1a oder 1 b. Die in die positive und negative Beugungsordnung gebeugten Teilstrahlen 29a bzw. 30a oder 29b bzw. 30b werden vom Element 33 auf den der Münze 1a der ersten Münzsorte zugeordneten Photodetektor 22a bzw. den der Münze 1 b der zweiten Münzsorte zugeordneten Photodetektor 22b fokussiert, unabhängig von der durch den Winkel $\alpha$ definierten momentanen Drehlage der Münze 1a bzw. 1 b. Das in die nullte Beugungsordnung gebeugte Strahlenbündel 35 wird vom Element 33 nicht auf die Photodetektoren 22a, 22b umgelenkt.

Das Element 33 hat also die Aufgabe, die von den Münzen 1a und 1b gebeugten Teilstrahlen 29a, 29b, 30a, 30b, die mit vorgegebener Einfallsrichtung an vier unterschiedlichen Punkten $P_a$, $R_a$, $P_b$, $R_b$ auf das Element 33 auftreffen, in eine durch den entsprechenden Punkt $P_a$, $R_a$, $P_b$, $R_b$ und die räumliche Lage des Photodetektors 22a bzw. 22b bestimmte Ausfallrichtung umzulenken. Diese Aufgabe kann ein Strichgitter erfüllen, dessen Gitterlinienabstand und Orientierung örtlich auf die Wellenlänge $\lambda$ und den durch die Einfall- und die Ausfallrichtung festgelegten Umlenkwinkel bestimmt sind. Die Richtung der Teilstrahlen 29a, 29b, 30a, 30b und die Lage der Punkte $P_a$, $R_a$, $P_b$, $R_b$ ändern sich mit dem Momentanwert des Winkels $\alpha$ (Fig. 3a), den die Münze 1a bzw. 1b während der Messung aufweist. Dementsprechend variieren die Gitterparameter entlang den von den Punkten $P_a$, $R_a$, $P_b$, $R_b$ in der Ebene des diffraktiven optischen Elementes 33 beschriebenen Bahnkurven.

Die Anzahl der im Lesegerät 19 vorhandenen Photodetektoren 22 bestimmt die Zahl der verschiedenen unterscheidbaren Reliefstrukturen 8 bzw. Gitter 13 (Fig. 3a) und somit die Zahl der unterscheidbaren Münzsorten.

Falls die Asymmetrie der Profilform des Gitters 13 als Echtheitsmerkmal verifiziert werden soll, ist wiederum jeder Photodetektor 22a, 22b durch zwei Photodetektoren zu ersetzen, und das diffraktive optische Element 33 ist so auszubilden, dass die Teilstrahlen 29a und 30a bzw. 29b und 30b auf verschiedene Photodetektoren fokussiert werden.

Das diffraktive optische Element 33 kann als beliebig geformter Körper, insbesondere als ebene Platte, ausgebildet sein. Dies erlaubt eine kostengünstige Vervielfältigung durch Prägen in thermoplastischen Kunststoff oder Abformen in z.B. UV-härtbaren Kunststoff oder durch Spritzgiessen. In einer Ausführung ist das Element 33 ein ebenfalls leicht vervielfältigbares Volumenhologramm mit dem Vorteil geringer Intensitätsverluste der umgelenkten Teilstrahlen 29, 30, da das Volumenhologramm eine sehr hohe Beugungseffizienz aufweist, die gegen 100 % erreichen kann. Durch eine konstruktive Gestaltung, die eine einfache Auswechslung des Elementes 33 gestattet, ist der Münzprüfer sehr einfach an einen Satz von Münzen eines vorbestimmten Landes oder mehrerer vorbestimmter Länder anzupassen.

Das diffraktive optische Element 33 kann nun so ausgebildet werden, dass auch die Erkennung einer Codierung oder Kennung auf der Münze 1 möglich ist. Bei der in der Fig. 5a dargestellten Münze 1 sind die Felder 14, 14' nicht in der Nähe des Mittelpunktes 18, sondern innerhalb eines Kreisrings entlang des Randes um den Mittelpunkt 18 angeordnet. Die Felder 14, 14' enthalten die mikroskopische Reliefstruktur 8 in der Form der Gitter 13 mit einer vorbestimmten Spatialfrequenz f. Die vom Lesegerät 19 bei einer vorbestimmten Wellenlänge $\lambda$ erkennbare Information ist in der Abfolge von Profilformen und/oder von azimutalen Orientierungen $\Omega_1$, $\Omega_2$ der Gitter 13 in Bezug auf die Radialrichtung am Ort des Feldes 14, 14', den relativen Azimuten $\Omega_1$, $\Omega_2$, enthalten, wie dies in der Zeichnung der Fig. 5a durch Striche in den Feldern 14, 14' dargestellt ist. Die seitlich zum Münzkanal 15 (Fig. 3a) angeordnete Lichtquelle 21 (Fig. 4) sendet durch die schlitzförmige Oeffnung 28 hindurch den Lichtstrahl 34 (Fig. 4) und beleuchtet auf der Münze 1 eine Sehne, die höchstens die Breite eines Feldes 14, 14' aufweist oder weniger als 1,5 mm breit ist. Jedes Feld 14, 14' passiert die schlitzförmige Öffnung 28 in einer Höhe H, die vom Momentanwert eines die Drehlage der Münze 1 beschreibenden Rollwinkels $\beta$ abhängt. In der Fig. 5b ist für ein ausgewähltes Feld 14 schematisch dargestellt, wie sich die Orientierung $\varphi$ eines Gitters 13 hinter der Öffnung 28 in Funktion der Höhe H ändert. Der Winkel $\varphi$ ist die Summe aus dem Rollwinkel $\beta$ und dem relativen Azimut $\Omega$. Das diffraktive optische Element 33 in der Fig. 5a ist nun so ausgelegt, dass es die am Gitter 13 gebeugten Teilstrahlen 29 (Fig. 4), 30 (Fig. 4) für alle möglichen Höhen H entsprechend der Orientierung $\varphi(H, \Omega)$ der Gitter 13 wenigstens auf einen diesem Gitter 13 zugeordneten Photodetektor 22 umlenkt. Beim Durchgang durch das diffraktive optische Element 33 (Fig. 4) dreht das Element 33 daher eine von den Teilstrahlen 29; 30 aufgespannte Beugungsebene um eine zu den Lichtstrahlen 34 (Fig. 4) parallele Drehachse, um den Rollwinkel $\beta$ zu kompensieren. Somit wer-

den die Teilstrahlen 29, 30 des am Feld 14 gebeugten Lichts, bei dem die Orientierung des Gitters 13 den relativen Azimut $\Omega_1$ hat, auf einen ersten Photodetektor 22, das an einem anderen Feld 14' gebeugte Licht, bei dem die Orientierung des Gitters 13 den relativen Azimut $\Omega_2$ hat, auf einen zweiten Photodetektor 22 abgebildet. Aus der Analyse des zeitlichen Verlaufs der von den verschiedenen Photodetektoren 22 abgegebenen Signale lässt sich auch die Reihenfolge der relativen Azimute $\Omega_1$, $\Omega_2$ der Gitter 13 bestimmen. Aus der Abfolge der den Intensitäten der Teilstrahlen 29, 30 proportionalen, elektrischen Signale aus den Photodetektoren 22 ermittelt die Schaltung 25 (Fig. 3a) die Abfolge der azimutalen Orientierungen $\Omega_1$, $\Omega_2$ der Gitter 13 relativ zur radialen Richtung, die eine Codierung über z.B. Herkunft und Wert der Münze 1 darstellt. In einer Ausführung unterscheiden sich die Münzen 1 verschiedener Länder durch die für die Gitter 13 eingesetzte Spatialfrequenz f, d.h. die Kennung bezieht sich nur auf den Münzwert. In einer anderen Ausführung des diffraktiven optischen Elements 33 ist das Lesegerät 19 in der Lage, das Gitter 13 mit dem symmetrischen Reliefprofil 8 von den Gittern 13 mit einem asymmetrischen Reliefprofil 8 mit dem gleichen relativen Azimut $\Omega$ und der gleichen Spatialfrequenz f zu unterscheiden. Die von den Teilstrahlen 29, 30 und dem Lichtstrahl 34 (Fig. 4) aufgespannte Beugungsebene des in der Oeffnung 28 beleuchteten Felds 14, 14' weist den Azimut $\Omega$ relativ zur radialen Richtung auf der Münze 1 auf. Das diffraktive optische Element 33 dreht beim Durchgang des gebeugten Lichts so, dass jeder der beiden Teilstrahlen 29, 30 auf einen Photodetektor 22 eines vorbestimmten Paars der Photodetektoren 22 fokussiert wird, d.h. dass das diffraktive optische Element 33 die von der beleuchteten Reliefstruktur 8 reflektierten Teilstrahlen 29; 30 aufgespannte Beugungsebene um den Winkel $\varphi$ (Fig. 5b) im Bereich -90° bei dem für die Münze 1 maximalen Wert von H bis +90° bei dem für die Münze 1 minimalen Wert von H in eine von dem vorbestimmten Paar der Photodetektoren 22 und dem Lichtstrahl 34 aufgespannten, dem Azimut $\Omega$ zugeordnete Detektorebene dreht. Die Teilstrahlen 29, 30 des Feldes 14, 14' mit dem relativen Azimut $\Omega$ treffen in der Detektorebene auf die lichtempfindlichen Flächen des vorbestimmten Paars der Photodetektoren 22 unabhängig davon, welchen Rollwinkel $\beta$ die Münze 1 beim Beleuchten des Felds 14, 14' aufweist. Die elektrische Schaltung 25 erkennt die Art des Gitters 13 mit dem relativen Azimut $\Omega$ aus dem Intensitätsverhältnis der elektrischen Signale des vorbestimmten Paars der Photodetektoren 22. Der Vorteil dieser Ausführung des Elementes 33 ist die Erweiterung des Umfangs der zu unterscheidenden Münzen 1.

Es ist auch möglich, dass die Anordnung der Felder 14, 14' einen Strichcode ergibt, der maschinenlesbar ist, wobei der Strichcode aus der zeitlichen Analyse des vom zugeordneten Photodetektors 22 abgegebenen Signals rekonstruiert wird. Dabei können ein einziges Gitter 13 oder auch mehrere Gitter 13 verwendet sein.

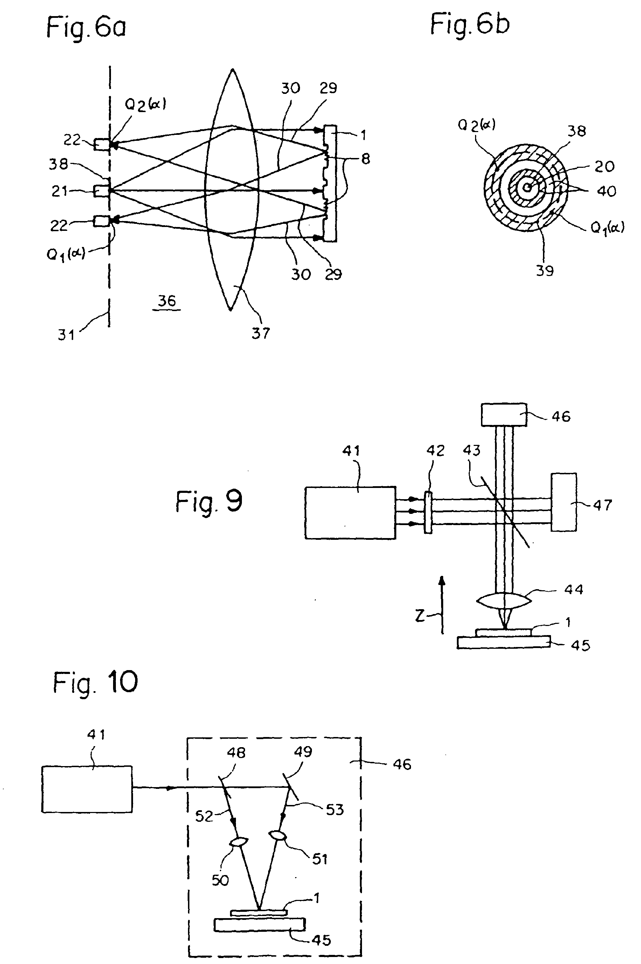

Die Fig. 6a und 6b zeigen das Prinzip eines weiteren Lesegerätes 36, das zur maschinellen Überprüfung von Münzen 1 geeignet ist, bei denen die mikroskopischen Reliefstrukturen 8 nicht um den Mittelpunkt 18 (Fig. 5a), sondern irgendwo auf der Münze 1 angeordnet sind. Beim Rollen der Münze 1 entlang des Münzkanals 15 (Fig. 3) beschreiben diese Reliefstrukturen 8 zykloidische Bahnen. In der Fig. 6a enthält das Lesegerät 36 eine Linse 37, in deren einem Brennpunkt 38 sich die einzige Lichtquelle 21 befindet. Die Linse 37 dient einerseits dazu, die Münze 1 beim Durchgang mit parallel gerichtetem, senkrecht einfallendem Licht zu beleuchten. Der Durchmesser des auf die Münze 1 auftreffenden Lichtstrahles 34 (Fig. 1) ist wenigstens so gross, dass die Reliefstrukturen 8 der zu prüfenden Münzen 1 beleuchtet sind. Das an den als Gitter 13 (Fig. 3b) ausgebildeten Reliefstrukturen 8 gebeugte Licht, die Teilstrahlen 29, 30, wird nun andererseits von der Linse 37 entsprechend dem Momentanwert des Winkels $\alpha$ (Fig. 3a) und dem Gitterlinienabstand auf bestimmte Punkte $Q_1(\alpha)$ und $Q_2(\alpha)$ in der Brennebene 31 der Linse 37 abgebildet. Die Gesamtheit der für alle Winkel $\alpha$ eines Gitters 13 möglichen Punkte $Q_1(\alpha)$ und $Q_2(\alpha)$ liegt somit auf einem Kreis 39 (Fig. 6b). Der oder die Photodetektoren 22 befinden sich ebenfalls in der Brennebene 31, die hier gleich der Fourierebene ist. Die Photodetektoren 22 sind, wie in der Fig. 6b gezeigt, als zum Brennpunkt 38 konzentrische Kreisringe 40 ausgebildet. Diese Konstruktion nach der Fig. 6a bietet den Vorteil, dass der Ort des Gitters 13 auf der Münze 1 und der Ort der Münze 1 selbst, z.B. beim Hüpfen der Münze 1 im Münzkanal 15 (Fig. 3a), für die Erkennung der Reliefstrukturen 8 keine Rolle spielt. Beim Rollen der Münze 1 ändert der Winkel $\alpha$ und damit wandern auch die Punkte $Q_1(\alpha)$ und $Q_2(\alpha)$. Falls die Linse 37 die Münze 1 auf einer gewissen Wegstrecke beleuchtet und falls pro Kreisring 39 (Fig. 6b) bzw. 40 (Fig. 6b) mehr als ein Photodetektor 22 vorhanden ist, kann die Bewegung der Punkte $Q_1(\alpha)$ und $Q_2(\alpha)$ verfolgt werden. Die Photodetektoren 22 können z.B. als zweidimensionaler CCD-Device mit vielen lichtempfindlichen Zellen ausgebildet sein.

Falls die Münzen 1 codiert sind, indem jede Münze 1 die Anzahl von N Feldern 14 (Fig. 2) aufweist, wobei sich die Gitter 13 der Felder 14 hinsichtlich ihres Gitterlinienabstandes, d.h. der Spatialfrequenz f, unterscheiden, dann liegen die Punkte $Q_1(\alpha)$ und $Q_2(\alpha)$ für jedes Gitter 13 auf einem anderen Kreisring 39, 40. Aus den elektrischen Signalen der den verschiedenen Kreisringen 39, 40 zugeordneten Photodetektoren 22 erkennt die elektronische Schaltung 25 (Fig. 3a) die Kennung der Münzen 1.

Bei einer anderen Ausgestaltung eines solchen Lesegerätes 36 ist in der Brennebene 31 nur ein eindimensionaler Array von Photodetektoren 22 angeordnet. Die Münze 1 wird auf einer gewissen Wegstrecke beleuchtet, so dass die Bahn des Punktes $Q_1(\alpha)$ oder $Q_2(\alpha)$ an einem Punkt der Wegstrecke bestimmt auf den entsprechenden Photodetektor 22 auftrifft.

Die mikroskopisch feinen Reliefstrukturen 8 der Münze 1 sind in einer anderen Ausführung so ausgestaltet, dass die Oberfläche 2 (Fig. 1), 3 (Fig. 1) der Münze 1 wie ein diffraktives optisches Element, z.B. wie eine Fresnellinse, wirkt. Das diffraktive optische Element dient dann sowohl als maschinell überprüfbares Echtheitsmerkmal als auch als abbildendes Element, das einen Leselichtstrahl des Lesegerätes auf einen vorbestimmten Photodetektor abbildet. Das diffraktive optische Element kann auf einer einzigen zusammenhängenden Fläche angeordnet oder über mehrere getrennte Felder 14, 14' verteilt sein. Im Fall der Fresnellinse genügt es also durchaus, wenn die Fläche der Fresnellinse nur teilweise mit der Reliefstruktur 8 ausgebildet ist. Somit unterliegt die grafische Gestaltung der Münzoberfläche 2, 3 mit den makroskopischen Reliefs 5 (Fig. 1) keinen Einschränkungen. Mit Vorteil ist jedoch die Gesamtheit der diffraktiven Strukturen des optischen Elementes axialsymmetrisch zum Mittelpunkt 18 (Fig. 5a) der Münze 1 ausgebildet, so dass die Abbildungseigenschaften des optischen Elementes unabhängig von der momentanen Drehlage der Münze 1 sind. Beispielsweise können die solcherart ausgebildeten Reliefstrukturen 8 in einer vorgesehenen Bildebene bezüglich einer senkrecht durch den Mittelpunkt der Münze 1 führenden Achse rotationsinvariante Kreisbänder ausleuchten, wenn sie mit parallelem Licht bestrahlt werden. Zum Lesen solcher Strukturen ist z.B. ein Lesegerät ähnlich dem Lesegerät 36 geeignet, bei dem die Beleuchtung der Münzoberfläche 2, 3 mit parallelem Licht erfolgt.

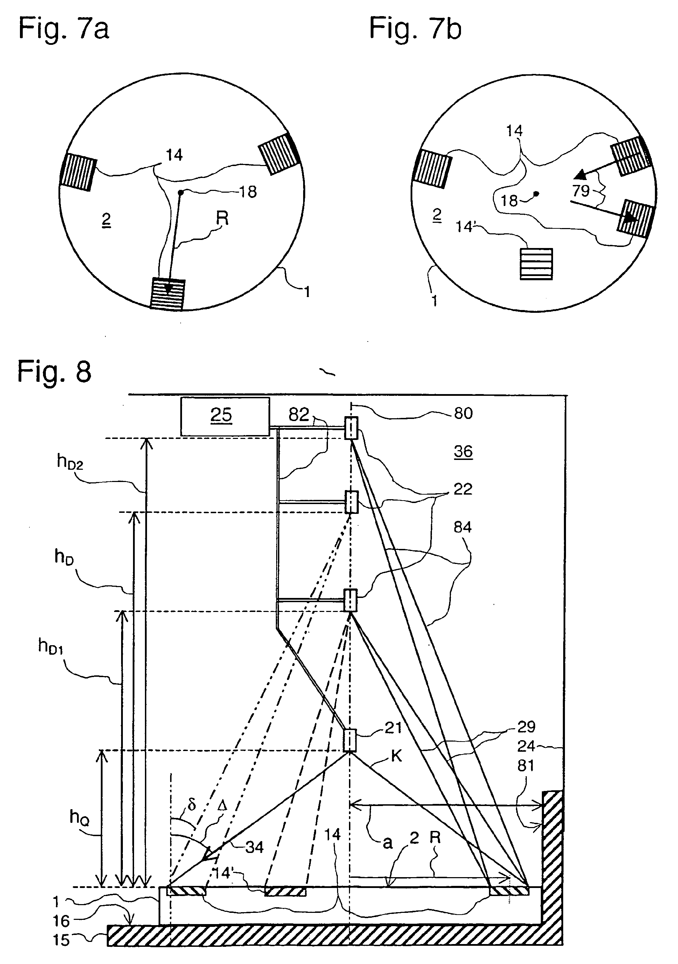

Die Fig. 7a und 7b zeigen eine erfindungsgemäße Ausführung der Münzen 1, bei denen die N Felder 14 einen vorbestimmten Abstand zum Mittelpunkt 18 der Münze 1 aufweisen. Im Beispiel der Fig. 7a haben drei Felder 14 den gleichen Abstand zum Mittelpunkt 18 der Münze 1. Im Beispiel der Fig. 7b ist wenigstens eines der Felder 14' in einem anderen Abstand zum Mittelpunkt 18 der Münze 1 angeordnet. Die Anzahl N der Felder 14, 14' ist nur durch den verfügbaren Platz auf der Oberfläche 2 bzw. 3 (Fig. 1) beschränkt. Das Feld 14, 14' ist mit einer Reliefstruktur 8 (Fig. 1) belegt und umfasst eine Fläche im Bereich von 0,5 mm$^2$ bis 10 mm$^2$, wobei die typische Grösse 1 mm$^2$ beträgt. Die Furchen der Reliefstruktur 8 sind senkrecht zur radialen Verbindungslinie zwischen dem Mittelpunkt 18 der Münze 1 und dem Mittelpunkt des jeweiligen Feldes 14, 14' so ausgerichtet, dass die Gittervektoren 79 in eine radiale Richtung weisen. Die Reliefstrukturen 8 können lineare Gitter 13 (Fig. 2) bilden oder so gekrümmt sein, dass die Furchen der Gitter 13 im Feld 14, 14' Kreisbogen um den Mittelpunkt 18 der Münze 1 bilden. Die Kreisbogen weisen den durch den Abstand des Mittelpunkts des Feldes 14 vom Mittelpunkt 18 der Münze 1 bestimmten Radialabstand R oder die durch den Abstand der einzelnen Furchen vom Mittelpunkt 18 der Münze 1 bestimmten Radien auf. Die übrigen Parameter der Reliefstruktur 8, wie z.B. Spatialfrequenz f, Profilform usw., hängen vom Ort des Feldes 14 auf der Münze 1 und der Konfiguration des Lesers 36 in der Fig. 8 ab.

Mit Vorteil ist die folgende Randbedingung erfüllt: Die mittels der senkrecht über dem Mittelpunkt 18 der Münze 1 angeordneten, punktförmigen Lichtquelle 21 (Fig. 6a) beleuchteten Reliefstrukturen 8 beugen das Licht so, dass einer der beiden Teilstrahlen 29, 30 in einem vorbestimmten Abstand zur Oberfläche 2 bzw. 3 (Fig. 1) eine Senkrechte durch den Mittelpunkt 18 der Münze 1 schneidet. Alle Gitter 13, die die Senkrechte im gleichen Abstand schneiden bilden eine Gruppe. Eine Anzahl M Gruppen ermöglichen eine Kennzeichnung der Münzen 1 mit den Reliefstrukturen 8, die diese Randbedingung erfüllen. Die Kennzeichnung lässt sich rotationsinvariant prüfen, d.h. die Kodierung ist vom momentanen Wert des Rollwinkels $\beta$ (Fig. 5a), der die Drehlage der im Münzkanal 15 (Fig. 3) rollenden Münze 1 beschreibt, ohne weiteres Hilfsmittel unabhängig auslesbar.

Die Fig. 8 zeigt eine Ausführung des Lesegeräts 36 für die Münzen 1 (Fig. 7a, Fig. 7b), die sich für eine rotationsinvariante Prüfung eignet. Das Lesegerät 36 weist eine optische Achse 80 auf, die senkrecht auf die hintere Seitenwand 16 des Münzkanals 15 so ausgerichtet ist, dass im Moment der Prüfung die optische Achse 80 senkrecht durch den Mittelpunkt 18 der im Münzkanal 15 rollenden Münze 1 geht. Ausser der elektronischen Schaltung 25 weist das Lesegerät 36 auf der optischen Achse 80 wenigstens eine punktförmige Lichtquelle 21 in einem Abstand $h_Q$ und wenigstens einen Photodetektor 22 in einem zweiten Abstand $h_D$ vom Mittelpunkt 18 der Münze 1 auf. Die Orte der Lichtquelle 21 und des Photodetektors 22 auf der optischen Achse 80 sind an sich vertauschbar, bestimmen jedoch die Parameter der Reliefstrukturen 8 auf den Münzen 1. Die Lichtquelle 21 und die Photodetektoren 22 sind über Leitungen 82 mit der elektronischen Steuerung 25 verbunden. Eine praktische Ausführung der punktförmigen Lichtquelle 21 strahlt Licht in einem auf die optische Achse 80 ausgerichteten, durch einen gedachten Kreiskegel K begrenzten Raumwinkel derart aus, dass die ganze, der Lichtquelle 21 zugewandte Oberfläche 2 der Münze 1 beleuchtet ist. In speziellen Fällen sind hier nicht gezeigte, zur optischen Achse 80 rotationssymmetrische Blenden zwischen der Lichtquelle 21 und der Oberfläche 2 und/oder zur radialen Begrenzung der Teilstahlen 29, 84 zwischen der Oberfläche 2 der Münze 1 und den Photodetektoren 22 angeordnet, um das Streulicht zu reduzieren. Das Gehäuseteil 24 hält Fremdlicht fern.

Der Abstand $h_D$ ist durch den Schnittpunkt des an den Feldern 14, 14' gebeugten Lichts, der Teilstrahlen 29, mit der optischen Achse 80 bestimmt. Die Abstände $h_Q$ und $h_D$ und der Radialabstand R des Feldes 14 bzw. 14' bestimmen den Einfallswinkel $\Delta$ und den Beugungswinkel $\delta$, wobei $\Delta$ der Winkel des aus der punktförmigen Lichtquelle 21 auf das Feld 14, 14' einfallenden Lichtstrahls und $\delta$ der Winkel des an den Reliefstrukturen 8 (Fig. 1) des Feldes 14, 14' gebeugten Lichts, der Teilstrahlen 29 bzw. 84, ist. Beide Winkel $\Delta$ und $\delta$ werden zur Senkrechten auf das jeweilige Feld 14, 14' gemes-

sen. Die Gittergleichung sin $(\delta)$ = sin $(\Delta)$ + $k*\lambda*f$ dient zur Berechnung der Spatialfrequenz f. Für eine vorbestimmte Anordnung der Lichtquelle 21 und der Photodetektoren 22 ist die Spatialfrequenz f nur von der Wellenlänge $\lambda$ der Lichtquelle 21, dem Radialabstand R und der Beugungsordnung k abhängig. Die N Felder 14, 14' mit den die Bedingungen dieses Abschnitts erfüllenden Reliefstrukturen 8 sind z.B. in einem Band 83 (Fig. 2) angeordnet, beispielsweise parallel zum Rand der Münze 1 im Schutz des Randwulstes und/oder in den Vertiefungen 7 (Fig. 1) im Muster des makroskopischen Reliefs 5 (Fig. 1) usw. Die Felder 14, 14' sind in einer anderen Ausführung über das bildliche Motiv der Münze 1 unauffällig verteilt. Die Felder 14, 14' sind durch einfache geometrische Formen oder Zeichen wie die Flächen 10 (Fig. 2), 11 (Fig. 2) begrenzt. Die N Felder 14, 14' werden unabhängig von der Verteilung auf einer der Oberflächen 2, 3 (Fig. 1) vom Lesegerät 36 gleichzeitig ausgelesen. Das Lesegerät 36 erzeugt aus dem Muster des gebeugten Lichts mittels der Photodetektoren 22 und der elektronischen Schaltung 25 ein für die Münze 1 charakteristisches Signal.

Da sich die beiden Winkel $\Delta$ und $\delta$ innerhalb eines Feldes 14, 14' mit dem radialen Abstand R ändern, erhöht sich die Spatialfrequenz f mit Vorteil innerhalb eines Feldes 14, 14' entsprechend der Zunahme des radialen Abstands R der Furchen der Reliefstruktur 8. Die Parameter der Reliefstrukturen 8 sind so gewählt, dass das gebeugte Licht mit der Wellenlänge $\lambda$ im Abstand $h_D$ die optische Achse 80 schneidet. Die Intensität des auf den im Abstand $h_D$ angeordneten Photodetektor 22 einfallenden Lichts ist proportional zum Flächeninhalt eines oder mehrerer Felder 14, 14', die das Licht in den gleichen Photodetektor 22 beugen. Die Münzen 1 zeichnen sich durch eine Codierung mit N Feldern 14, 14' mit den Reliefstrukturen 8 aus, die vorbestimmt auf die Reliefstrukturen 8 einfallendes Licht derart beugen, dass das gebeugte Licht in einem der vorbestimmten Abstände $h_D$ über dem Mittelpunkt 18 der Münze 1 die optische Achse 80 schneidet.

Die Photodetektoren 22 sind auf der optischen Achse 80 so angeordnet, dass sich die Teilstrahlen 29 bzw. 84 auf die lichtempfindliche Fläche des im vorbestimmten Abstand $h_D$ angeordneten Photodetektors 22 konzentrieren und dort in ein elektrisches Signal proportional zur Intensität der Teilstrahlen 29, 84 umgewandelt werden. Die elektrischen Signale werden an die elektronische Steuerung 25 abgegeben, wobei die Steuerung 25 so eingerichtet ist, dass sie aus den an die Lichtquelle 21 gerichteten Kommandos betreffend der Wellenlänge $\lambda$ und der Intensität des emittierten Lichts und aus den als Antwort von den Photodetektoren 22 eintreffenden elektrischen Signalen eine Münze 1 aus einem vorbestimmen Satz von Münzen 1 erkennen kann.

Bei einer verbesserten Ausführung des Lesegeräts 36 ist die punktförmige Lichtquelle 21 in der Lage Licht zu emittieren, dessen Wellenlänge während des Prüfvorgangs zwischen vorbestimmten Werten $\lambda_1$, $\lambda_2$ usw. umgeschaltet wird. Die Lichtquelle 21 kann beispielsweise eine Leucht- oder Laserdiode sein, die entsprechend ihrer Ansteuerung ein einfarbiges Licht mit der einen oder anderen Wellenlänge $\lambda_1$, $\lambda_2$ usw. aussendet. In bestimmten Abständen $h_D$, $h_{D1}$, $h_{D2}$ usw. ist je ein Photodetektor 22 auf der optischen Achse 80 angeordnet. Für jede der Wellenlängen $\lambda_1$, $\lambda_2$ usw. ist eine Gruppe von Reliefstrukturen 8 (Fig. 1) so vorgesehen, dass jede Reliefstruktur 8 das gebeugte Licht auf den ihr zugeordneten Photodetektor 22 lenkt. Bestimmte Reliefstrukturen 8 beugen Licht der Wellenlänge $\lambda_1$ zum ersten Photodetektor 22 und Licht der Wellenlänge $\lambda_2$ zum zweiten Photodetektor 22. Während die Lichtquelle 21 Licht mit der Wellenlänge $\lambda_1$ aussendet, empfängt beispielsweise der erste Photodetektor 22 im Abstand $h_{D1}$ das an der bestimmten Reliefstruktur 8 in einem der Felder 14 gebeugte Licht mit den Teilstrahlen 29, sobald die optische Achse 80 in die unmittelbare Nähe des Mittelpunkts 18 der echten Münze 1 kommt. Wechselt die Lichtquelle 21 zur zweiten Wellenlänge $\lambda_2$, werfen die bestimmten Reliefstrukturen 8 das gebeugte Licht, die Teilstrahlen 84, auf den im Abstand $h_{D2}$ auf der optischen Achse 80 angeordneten zweiten Photodetektor 22. Das mit wenigstens zwei verschiedenen Wellenlänge $\lambda_1$, $\lambda_2$ usw. arbeitende Lesegerät 36 ermöglicht bei den Münzen 1, die ein Feld 14 bzw. 14' mit der bestimmten Reliefstruktur 8 aufweisen, ein sicheres Unterscheiden von an zufällig richtig geneigten Flächen des makroskopischen Reliefs 5 (Fig. 1) in die Photodetektoren 22 reflektierten Lichtstrahlen und dem gebeugten Licht 29, 84, sowie ein Ueberprüfen der Photodetektoren 22. Ein Feld 14 bzw. 14' mit der bestimmten Reliefstruktur 8 bildet daher ein Echtheitsmerkmal der Münze 1. Das Umschalten von einer Wellenlänge zur andern durch die elektronische Steuerung 25 erfolgt insbesondere bei der Verwendung von Leucht- oder Laserdioden ausserordentlich schnell, so dass die im Münzkanal 15 rollende Münze 1 am Ort der optischen Achse 80 als ruhend angenommen werden kann, obwohl nur in der Zeitspanne, in der die optische Achse 80 die Münze 1 im Mittelpunkt 18 durchstösst, die Bedingungen für das Auslesen der Codierung bzw. des Echtheitsmerkmals erfüllt sind.

Die Münzen 1 sind entsprechend dem Münzwert und/oder der ausgebenden Stelle codiert, wobei Anzahl N der Felder 14, 14', der Umfang m des Sets der Reliefstrukturen 8, die Anzahl M der Photodetektoren 22, die Zahl der von den Photodetektoren 22 feststellbaren Intensitätsstufen und die Anzahl der verfügbaren Wellenlängen $\lambda_{1,2}$ den Umfang der unterscheidbaren Münzen 1 festlegen. Ein Nullelement bildet ein Feld 14 bzw. 14' ohne eine der Reliefstrukturen 8.

Nachfolgend ist eine einfache Codierung beschrieben. Bei der Beleuchtung der Münze 1 durch die punktförmige Lichtquelle 21 mit Licht der Wellenlänge $\lambda$ reflektiert eine erste Gruppe der Felder 14 das gebeugte Licht, die Teilstrahlen 29, auf den Photodetektor 22 im Abstand $h_{D1}$, während gleichzeitig eine andere Gruppe der Felder 14 das gebeugte Licht, die Teilstrahlen 84, auf den Photodetektor 22 im Abstand $h_{D2}$ reflektiert. Mit dieser Anordnung lassen sich $2^M - 1$ Münzsorten, d.h. für M = 2 drei Münzsorten mit den gleichen Abmessungen voneinander unterscheiden, wobei die erste Münzsorte ein Signal nur im Photodetektor 22 im Abstand $h_{D1}$, die zweite Münzsorte ein Signal nur im Photodetektor 22 im Abstand $h_{D2}$ und die dritte Münzsorte simultan das Signal in beiden Photodetektoren 22 erzeugt. Eine Münze 1, die kein gebeugtes Licht 29, 84 in einen der beiden Photodetektoren 22 reflektieren kann und daher kein Signal in wenigstens einem der beiden Photodetektoren 22 zu erzeugen vermag, wird zurückgewiesen. Das am Beispiel von zwei Photodetektoren 22 und zwei Reliefstrukturen 8 mit wenigstens zwei Feldern 14, 14' gezeigte Prinzip einer einfachen Codierung der Münzen 1 lässt sich erweitern auf eine beliebige Anzahl von Münzsorten, die nur durch den vertretbaren Aufwand bei der Herstellung der Münzen 1 und den Aufwand für das Lesegerät 36 begrenzt ist.

Da jede Münze 1 ihrem Wert entsprechend einen bestimmten Durchmesser aufweist, kann das oben beschriebene Lesegerät 36 nur diejenigen Münzen 1 erkennen, deren Radius gleich dem Abstand a der optischen Achse 80 von der Rollfläche 81 des Münzkanals 15 ist. Um einen ganzen Satz Münzen 1 zu erkennen, ist daher für jeden Münzdurchmesser ein Lesegerät 36 vorzusehen. Die optischen Achsen 80 der Lesegeräte 36 sind parallel und weisen die Abstände a von der Rollfläche 81 des Münzkanals 15 auf, die gleich den Radien der Münze 1 der betreffenden Denominationen sind. Die Einfachheit des Aufbaus der Lesegeräte 36 ermöglicht den Zusammenbau einer Prüfeinrichtung mit der entsprechenden Anzahl Lesegeräte 36 auf kleinstem Platz zu einem günstigen Preis.

Der Vollständigkeit halber ist eine Variante des Aufbaus der Lichtquelle 21 erwähnt, die für jede Wellenlänge $\lambda_1$, $\lambda_2$ usw. eine Leucht- oder Laserdiode aufweist, wobei die Lichtstrahlen jeder Leucht- oder Laserdiode mit optischen Mitteln in die optische Achse 80 eingekoppelt werden und die Farbe des von der Lichtquelle 21 ausgesandten Lichts durch Einschalten einer oder mehrerer Leuchtdioden gesteuert wird. In einer anderen Ausführung des Lesegeräts 36 sind anstelle einer einzigen Lichtquelle 21 mit umsteuerbarer Wellenlänge $\lambda$ des emittierten Lichts, mehrere Lichtquellen 21 mit verschiedenen Wellenlängen $\lambda_1$, $\lambda_2$ usw. des emittierten Lichts zusammen mit den Photodetektoren 22 auf derselben optischen Achse 80 angeordnet. In einer weiteren Ausführung des Lesegeräts 36 sind mehrere optische Achsen 80 mit einer Lichtquelle 21 und den zugehörigen Photodetektoren 22 parallel angeordnet und weisen den gleichen Abstand a zur Rollfläche 81 auf. Die Lichtquelle 21 und die zugehörigen Photodetektoren 22 nehmen nur wenig Raum ein, so dass die optischen Achsen 80 wenige Millimeter, z.B. weniger als 5 mm, längs des Münzkanals 15 beabstandet sind. Das Lesegerät 36 ist vom Platzbedarf her leicht in einen herkömmlichen Münzprüfer mit induktiven Sensoren einzubauen.

Eine weitere Möglichkeit, die Zuverlässigkeit der Münzprüfung weiter zu erhöhen besteht darin, auf der Münze 1 ein Feld 14 mit einem Gitter 13 vorzusehen, welches als Referenzgitter dient. Im Lesegerät 19 bzw. 36 ist diesem Referenzgitter ein Photodetektor 22 zugeordnet und die Intensität des auf diesen Photodetektor 22 fallenden, am Referenzgitter gebeugten Lichtes dient als Referenzintensität, z.B. zur Bestimmung des weiter oben genannten Schwellwertes.

Weiter ist es möglich, die Zahl der Codierungsmöglichkeiten bei einer vorgegebenen Anzahl von Photodetektoren 22 zu erhöhen, wobei mehrere Felder 14, 14' ihre Teilstrahlen 29, 84 auf den gleichen Photodetektor 22 werfen. Die Intensitäten des gebeugten Lichts erkennt die elektronische Schaltung 25 aus der Höhe der elektrischen Signale der Photodetektoren 22. Jeder unterscheidbare Pegel entspricht einem anderen Codierungswert.

Um Betrugsversuche weiter zu erschweren, ist es vorteilhaft, die hier beschriebenen beugungsoptischen Münzprüfungen untereinander zu kombinieren, wobei sie zusätzlich durch an sich bekannte optische (siehe z.B. das europäische Patent EP-0 694 888 B1), magnetische (siehe z.B. die europäische Patentanmeldung EP-0 704 825 A1) oder andere Prüfverfahren, die Aufschluss über die Geometrie und die Materialeigenschaften der Münze 1 geben, ergänzt werden können.

Zur Herstellung der mikroskopischen Reliefstrukturen 8 (Fig. 1) sind verschiedene Verfahren möglich. Bekannt ist das Prägeverfahren für relativ weichmetallische Oberflächen wie z.B. Gold. Im folgenden sind Verfahren mit Lasern beschrieben, die auch für härtere Metalloberflächen 2, 3 geeignet sind. Bei einem weiteren Verfahren werden die mikroskopischen Reliefstrukturen 8 in die Materialoberfläche 2, 3 eingeätzt.

Die Fig. 9 zeigt eine erste Einrichtung zur Herstellung der mikroskopischen Reliefstruktur 8 (Fig. 1) auf der Münze 1 oder einer anderen vergleichsweise harten Materialoberfläche 2 (Fig. 1), 3 (Fig. 1), z.B. eines Prägestempels oder eines andern metallischen Gegenstands. Die Einrichtung weist einen Laser 41, eine Maske 42, einen teildurchlässigen Spiegel 43, eine Abbildungsoptik 44, eine Haltevorrichtung 45, eine Justiervorrichtung 46 und ein Gerät zur Strahldiagnostik 47 auf. Die mit der Reliefstruktur 8 zu versehende Münze 1 wird von der Haltevorrichtung 45 gehalten. Die genaue Lage der Münze 1 wird mittels der Justiervorrichtung 46 erfasst und insbesondere die z-Lage auf einen vorbestimmten Wert geregelt. Die Maske 42 wird vom Laser 41 beleuchtet. Mittels der Abbildungsoptik 44 wird die Maske 42 verkleinert auf die Münze 1 abgebildet. Eine typische Verkleinerung beträgt 15:1. Dank der 15-fachen Verkleinerung ist die auf die Maske 42 fallende Lichtleistung um den Faktor 225 kleiner als die auf die Münze 1 fallende Lichtleistung, wodurch es möglich wird, lokal auf der Münze 1 Material abzutragen, ohne dass Material von der Maske 42 abgetragen wird. Die Intensitätsverteilung des vom Laser 41 emittierten Strahles in einer zur Maske 42 parallelen yz-Ebene sei vor der Maske 42 $l_0(y, z)$ und die Transmissionsfunktion der Maske 42 sei $t(y, z)$. Die Intensitätsverteilung nach der Maske 42 ist dann $l(y, z) = t(y, z) * l_0(y, z)$. Die Profilform der Reliefstruktur 8 hängt neben der Form der auf die Münze 1 auftreffenden Intensitätsverteilung $l(x, y)$ auch von weiteren Faktoren wie Absorptionskoeffizient, thermische Leitfähigkeit, thermische Diffusionsfähigkeit, Schmelztemperatur und ev. Bandlücke des für die Oberfläche der Münze 1 gewählten Materials ab. Die Profilform hängt somit insbesondere davon ab, ob nur eine einzige oder ob mehrere Belichtungen in einem angepassten Zeitabstand erfolgen. Da eine hohe Lichtleistung erforderlich ist, um metallisches Material abtragen zu können, ist der Laser 41 mit Vorteil ein gepulster Excimer- oder ein Festkörperlaser.

Eine zweite Einrichtung zur Herstellung der mikroskopischen Reliefstruktur 8 auf der Münze 1 ist in der Fig. 10 gezeigt. Die Einrichtung weist den Laser 41, einen Strahlteiler 48, einen Spiegel 49, fokussierende optische Systeme 50, 51, die Haltevorrichtung 45 und die Justiervorrichtung 46 auf. Mittels des Strahlteilers 48 und des Spiegels 49 werden zwei Strahlen 52, 53 erzeugt, welche unter verschiedenen Winkeln schräg auf die Oberfläche der Münze 1 auftreffen. Ordnet man dem ersten Strahl 52 den Wellenvektor $k_1$ und die Amplitude $l_1$, dem zweiten Strahl 53 den Wellenvektor $k_2$ und die Amplitude $l_2$ zu, und ist am Ort r auf der Münze 1 die Phase des ersten Strahles 52 $\phi 1$ und die Phase des zweiten Strahles 53 $\phi 2$, dann beträgt die Intensität

$$I(r) = I_1 + I_2 + 2*\sqrt{I_1 * I_2}*\cos\Delta\phi$$

mit $\Delta\phi = (k_1 - k_2)*r + \phi_1 - \phi$. Diese Methode ist als Zwei-Strahl-Interferenz Methode bekannt. Zur Realisierung komplexerer Reliefstrukturen 8 (Fig. 1) in der Metalloberfläche der Münze 1, wird die Münze 1 mehrmals mit einem Laserpuls belichtet, wobei die Orientierung der Münze 1 wie auch die Richtung der Wellenvektoren $k_1$ und $k_2$ durch räumliches Verstellen der Komponenten 48, 49, 50, 51 variiert werden. Eine beliebige Profilform, z.B. ein Sägezahn, kann realisiert werden, indem die Richtung der Wellenvektoren $k_1$ und $k_2$ für eine Anzahl n aufeinanderfolgender Belichtungsimpulse so eingestellt sind, dass sich die jeweiligen Interferenzterme $l_n(r)$ wie die Koeffizienten der entsprechenden Fourierreihe verhalten. Bei der Belichtung mit extrem kurzen Lichtpulsen ist die die Geometrie der Strahlen 52, 53 bestimmende Lage des Strahlteilers 48 und des Spiegels 49 sorgfältig aufeinander abzustimmen, damit die Wegdifferenz der beiden Strahlen 52, 53 kleiner als die Kohärenzlänge des vom Laser 41 emittierten Lichtes ist.

Es ist möglich, die in den Figuren 9 und 10 gezeigten Einrichtungen zu kombinieren. Die Maske 42 kann ein räumlicher Lichtmodulator (SLM oder spatial light modulator) mit einzeln adressierbaren Pixeln sein, so dass die auf der Münze 1 zu erzeugende mikroskopische Reliefstruktur 8 auf einfache Weise computergesteuert variiert werden kann. Jedes Pixel ist entsprechend der Ansteuerung wenigstens teilweise durchsichtig oder annähernd undurchsichtig. Auf diese Weise kann z.B. ein Gitter mit einer hohen Linienzahl und wohldefinierter Umrandung erzeugt werden. Mittels dieser Einrichtung kann jede Münze 1 mit einer individuellen Reliefstruktur 8 versehen werden, die beispielsweise in codierter Form eine fortlaufende Nummer enthalten kann. Die hohe Leistung des Lasers 41 ermöglicht einen hohen Durchsatz an Münzen 1 zu einem kostengünstigen Preis.

Die zwei beschriebenen Laserverfahren lassen sich auch anwenden, um beugungsoptische Reliefstrukturen 8 als Echtheitszeugnis auf andere Materialoberflächen als die von Münzen aufzubringen. Besonders erwähnt seien Uhren, Schmuck, Ersatzteile oder Komponenten mit Metalloberflächen, insbesondere aus Gold, Messing, Stahl, Titan, Aluminium, Kupfer-Nickel-Legierungen, usw., oder mit Keramikoberflächen. Eine besondere Anwendung findet diese Technik bei Halbleiterchips mit integrierten Schaltungen, wobei nach einem erfolgreichen Abschluss der Funktionsprüfung das Echtheitszeugnis mit beugungsoptischen Reliefstrukturen 8 in der Materialoberfläche, z.B. in der Rückseite des Halbleiterchips, durch eines der oben beschriebenen Verfahren des Materialabtrags erzeugt wird.

Bei einem Ätzverfahren wird der mit mikroskopischen Reliefstrukturen 8 zu versehende Gegenstand, z.B. die Münze 1 beispielsweise in einem Tauchbad mit einer dünnen lichtempfindlichen Kunststoffschicht überzogen. Die Dicke dieser Kunststoffschicht liegt im Bereich von einigen Hundert bis zu einigen Tausend Nanometern. Anschliessend erfolgt eine Belichtung und Entwicklung der Kunststoffschicht, so dass mikroskopisch feine Stellen der Münzoberfläche frei von Kunststoff werden. In einem Ätzbad werden dann mikroskopische Reliefstrukturen 8 in die Münzoberfläche eingeätzt. Zum Schluss wird der restliche Kunststoff wieder entfernt.

Diese Verfahren eignen sich auch dazu, in eine bereits mit der Negativform des makroskopischen Reliefs 5 (Fig. 1) versehene Prägematrize die Negativform der mikroskopischen Reliefstrukturen 8 einzubringen und so die Reliefs direkt in die Materialoberfläche eines Rohlings einzuprägen. In einer anderen Ausführung der Figur 1 finden anstelle der direkt ins Metall eingebrachten Reliefstrukturen 8 die in Kunststoff abgeformten Reliefstrukturen 8 Verwendung. Beispielsweise sind passende Abschnitte aus einem Laminat von Kunststoffschichten, die die mit einer Reflexionsschicht überzogenen Reliefstrukturen 8 einschliessen, auf dem Boden der Vertiefungen 7 eingeklebt. Eine dazu verwendbare Folie ist in der EP- 401'466 beschrieben.

In einem optionalen letzten Verfahrensschritt wird auf die Reliefstrukturen 8 der Münzen 1 der Schutzlack 9 (Fig. 1) aufgetragen. Beim Prägestempel, der mit dem nach den oben beschriebenen Verfahren erzeugten Negativ der in die Oberfläche 2 bzw. 3 des zu prägenden Materials einzubringenden Strukturen versehen ist, erfolgt als letzter Verfahrensschritt eine Härtung des Prägestempels durch ein an sich bekanntes Verfahren, wie z.B. eine Nitrierung usw.

## Patentansprüche

1.  Münze (1) mit einer mit makroskopischen Reliefs (5) zur Darstellung von Motiven strukturierten metallischen Oberfläche (2; 3), die zur Angabe des Münzwertes und als Erkennungsmerkmal dienen, mit Flächen (10; 11; 12; 20) und Feldern (14; 14') auf der Oberfläche (2; 3), die eine optisch maschinell auslesbare Kennung bilden und die mikroskopisch feine, beugungswirksame Reliefstrukturen (8) aufweisen, **dadurch gekennzeichnet, dass** die Felder (14; 14') in vorbestimmten Radialabständen (R) vom Münzmittelpunkt (18) angeordnet sind, dass die Reliefstrukturen (8) der Felder (14; 14') Gitter (13) mit radial ausgerichteten Gittervektoren (79) sind, dass die Felder (14; 14') Gruppen bilden, wobei die Spatialfrequenz f der Reliefstrukturen (8) und der Radialabstand (R) vom Münzmittelpunkt (18) die Zuordnung eines Felds (14; 14') zu einer der Gruppen der Felder (14; 14') bestimmen, wobei sich die Gruppen der Felder (14; 14') mit gleichem Radialabstand (R), die unterschiedlichen Gruppen zugeordnet sind, durch die Spatialfrequenz f der Reliefstruktur (8) unterscheiden, und dass Feldern (14; 14') der gleichen Gruppe die Spatialfrequenz f der Reliefstruktur (8) eines Felds (14; 14') abhängig vom Radialabstand (R) des Felds (14; 14') so gewählt ist, dass bei einer Befeuchtung der Reliefstruktur (8) mittels einer in einem vorbestimmten Abstand ($h_Q$) senkrecht über dem Münzmittelpunkt (18) angeordneten, punktförmigen Lichtquelle (21) mit monochromatischem Licht einer Wellenlange ($\lambda$) einer der Teilstrahlen (29; 84) des gebeugten Lichts in einem für diese Gruppe vorbestimmten Abstand ($h_D$) den Münzmittelpunkt (18) überquert.

2.  Münze (1) nach Anspruch 1, **dadurch gekennzeichnet, dass** die Felder (14; 14') der Reliefstrukturen (8) mit radial ausgerichteten Gittervektoren (79) Flächen aus dem Bereich von 0,5 mm$^2$ bis 10 mm$^2$ umfassen.

3.  Münze (1) nach Anspruch 1 oder 2, **dadurch gekennzeichnet, dass** die die Reliefstrukturen (8) aufweisenden Flächen (10; 11; 12) Teil des makroskopischen Reliefs (5) sind und dass das Relief (5) mit den die Reliefstrukturen (8) aufweisenden Flächen (10; 11; 12) ein visuell überprüfbares Sicherheitsmerkmal bilden.

4.  Münze (1) nach einem der Ansprüche 1 bis 3, **dadurch gekennzeichnet, dass** in einer den Münzmittelpunkt (18) umgebenden Teilfläche (20) die Reliefstrukturen (8) ein Gitter (13) mit geraden oder zum Mittelpunkt konzentrischen Furchen bilden.

5.  Münze (1) nach einem der Ansprüche 1 bis 4, **dadurch gekennzeichnet, dass** die mikroskopischen Reliefstrukturen (8) auf dem Boden von in die Oberfläche (2; 3) eingelassenen Vertiefungen (7) angeordnet sind.

6.  Münze (1) nach einem der Ansprüche 1 bis 5, **dadurch gekennzeichnet, dass** in den Flächen und Feldern (10; 11; 12; 14; 14'; 20) die mikroskopischen Reliefstrukturen (8) direkt in die Oberfläche (2; 3) eingeformt sind.

7.  Münze (1) nach einem der Ansprüche 1 bis 6, **dadurch gekennzeichnet, dass** die mikroskopischen Reliefstrukturen (8) mit einem ihre Furchen verfüllenden, transparenten Schutzlack (9) überdeckt sind.

8.  Münze (1) nach Anspruch 5, **dadurch gekennzeichnet, dass** in den Vertiefungen (7) ein passender Abschnitt eines die Reliefstrukturen (8) enthaltenden Kunststofflaminats angeordnet ist.

9.  Münzprüfer mit einem Lesegerät (19; 36), das Lichtquellen (21), Photodetektoren (22) und eine mit den Lichtquellen (21) und den Photodetektoren (22) verbundene elektronische Schaltung (25) enthält und zur maschinellen Überprüfung der Kennung mit Reliefstrukturen (8) einer in einem Münzkanal (15) auf einer Rollfläche (81) rollenden oder gleitenden Münze (1) nach Anspruch 1 eingerichtet ist, **dadurch gekennzeichnet, dass** eine optische Achse (80) des Lesegeräts (19; 36) durch wenigstens einen Photodetektor (22) und wenigstens eine punktförmige Lichtquelle (21) festgelegt ist, dass die optische Achse (80) senkrecht zu einer Seitenwand (16; 17) des Münzkanals (15) ausgerichtet ist und von der Rollfläche (81) einen dem Radius der zu prüfenden Münze (1) entsprechenden Abstand (a) aufweist, dass die Lichtquelle (21) in einem Abstand ($h_Q$) und jeder Photodetektor (22) in einem Abstand ($h_D$) von der Oberfläche (2; 3) der Münze (1) entfernt derart angeordnet sind, dass von der Lichtquelle (21) ausgesandtes, monochromatisches Licht der Wellenlänge ($\lambda$) von wenigstens einer Reliefstruktur (8) der zu prüfenden Münze (1) als Teilstrahl (29; 84) gegen die optische Achse (80) gebeugt und auf den vorbestimmten, im Abstand ($h_D$) angeordneten Photodetektor (22) konzentriert ist, und dass die elektronische Schaltung (25) dazu eingerichtet ist, den Durchgang des Mittelpunkts (18) der Münze (1) durch die optische Achse (80) und die Echtheit der Münze (1) aus den der Intensität des Teilstrahls (29; 84) proportionalen elektrischen Signalen der Photodetektoren (22) zu erkennen.

**10.** Münzprüfer nach Anspruch 9, **dadurch gekennzeichnet, dass** die monochromatischen Lichtstrahlen (34) aus der Lichtquelle (21) eine Wellenlänge ($\lambda$) aus einer Anzahl vorbestimmter Wellenlängen ($\lambda_1$, $\lambda_2$) aufweist und dass ein Kommando der elektronischen Schaltung (25) an die Lichtquelle (21) die Wellenlänge ($\lambda$) des emittierten Lichtstrahls (34) bestimmt.

**11.** Verfahren zum Aufbringen einer mikroskopischen Reliefstruktur (8) auf eine vergleichsweise harte Materialoberfläche (2, 3) zur Herstellung einer Münze (1) nach einem der Ansprüche 1 bis 4, **dadurch gekennzeichnet, dass** die mikroskopischen Reliefstrukturen (8) durch Abtragen von Material mittels Belichten der Materialoberfläche (2, 3) mit einem Laserstrahl erzeugt werden.

**12.** Verfahren nach Anspruch 11, **dadurch gekennzeichnet, dass** der Laserstrahl eine die Form der mikroskopischen Reliefstrukturen (8) bestimmende Maske (42) und anschliessend ein optisches Abbildungssystem (44) zur Verkleinerung passiert.

**13.** Verfahren nach Anspruch 11, **dadurch gekennzeichnet, dass** der Laser nach der Methode der 2-Strahl-Interferenz auf der Materialoberfläche (2; 3) ein mikroskopisch feines Interferenzmuster mit einer vorbestimmten Spatialfrequenz f erzeugt und das Material der Oberfläche (2; 3) an den Stellen mit erhöhter Intensität im Interferenzmuster zur Erzeugung der mikroskopischen Reliefstrukturen (8) abgetragen wird.

**14.** Verfahren nach einem der Ansprüche 11 bis 13, **dadurch gekennzeichnet, dass** die Materialoberfläche (2, 3) mit den zuvor erzeugten Reliefstrukturen (8) durch Nitrieren gehärtet wird.

**Claims**

**1.** Coin (1) having a metallic surface (2; 3), which is patterned with macroscopic reliefs (5) for showing motifs and which serve to indicate the value of the coin and as a distinguishing feature, having areas (10; 11; 12; 20) and fields (14; 14') on the surface (2; 3), which form an optically machine-readable identifier and which have microscopically fine, actively diffracting relief structures, **characterized in that** the fields (14; 14') are arranged in predetermined radial spacings (R) from the centre point (18) of the coin, **in that** the relief structures (8) of the fields (14; 14') are gratings (13) with radially aligned grating vectors (79), **in that** the fields (14; 14') form groups, with the spatial frequency f of the relief structures (8) and the radial spacing (R) from the centre point (18) of the coin determining the association of a field.(14; 14') with one of the groups of fields (14; 14'), with the groups of the fields (14; 14') with the same radial spacing (R), which are associated with different groups, differing by way of the spatial frequency f of the relief structure (8), and **in that** in fields (14; 14') of the same group, when illuminating the relief structure (8) using a punctiform light source (21), which is arranged at a predetermined spacing ($h_Q$) vertically above the centre point (18) of the coin, with monochromatic light of a wavelength ($\lambda$), one of the partial beams (29; 84) of the diffracted light crosses the centre point (18) of the coin at a spacing ($h_D$) which is predetermined for said group.

**2.** Coin (1) according to Claim 1, **characterized in that** the fields (14; 14') of the relief structures (8) with radially aligned grating vectors (79) comprise areas in the range of 0.5 mm$^2$ to 10 mm$^2$.

**3.** Coin (1) according to Claim 1 or 2, **characterized in that** the areas (10; 11; 12) which have the relief structures (8) are part of the macroscopic relief (5) and **in that** the relief (5), together with the areas (10; 11; 12) which have the relief structures (8), forms a visually verifiable security feature.

**4.** Coin (1) according to one of Claims 1 to 3, **characterized in that** in a partial area (20) surrounding the centre point (18) of the coin, the relief structures (8) form a grating (13) with straight grooves or grooves which are concentric with respect to the centre point.

**5.** Coin (1) according to one of Claims 1 to 4, **characterized in that** the microscopic relief structures (8) are arranged on the bottom of indentations (7) which are inlaid into the surface (2; 3).

**6.** Coin (1) according to one of Claims 1 to 5, **characterized in that** the microscopic relief structures (8) are formed directly into the surface (2; 3) in the areas and fields (10; 11; 12; 14; 14'; 20).

**7.** Coin (1) according to one of Claims 1 to 6, **characterized in that** the microscopic relief structures (8) are covered by a transparent protective lacquer (9) which fills their grooves.

**8.** Coin (1) according to Claim 5, **characterized in that** a matching section of a plastic laminate containing the relief structures (8) is arranged in the indentations (7).

**9.** Coin verifier having a reading appliance (19; 36), which contains light sources (21), photodetectors (22) and an electronic circuit (25) connected to the light sources (21) and the photodetectors (22) and which is configured for machine-based verification of the identifier with relief structures (8) of a coin (1) according to Claim 1, which coin rolls or slides on a rolling surface (81) in a coin passage (15), **characterized in that** an optical axis (80) of the reading appliance (19; 36) is defined by at least one photodetector (22) and at least one punctiform light source (21), **in that** the optical axis (80) is aligned perpendicular to a side wall (16; 17) of the coin passage (15) and has a spacing (a) from the rolling surface (81) which corresponds to the radius of the coin (1) to be verified, **in that** the light source (21) is arranged at a spacing ($h_Q$) and each photodetector (22) is arranged at a spacing ($h_D$) from the surface (2; 3) of the coin (1) such that monochromatic light, emitted by the light source (21), with the wavelength ($\lambda$) is diffracted by at least one relief structure (8) of the coin (1) to be verified as a partial beam (29; 84) towards the optical axis (80) and is concentrated on the predetermined photodetector (22) which is arranged at a spacing ($h_D$), and **in that** the electronic circuit (25) is configured to recognize the passage of the centre point (18) of the coin (1) through the optical axis (80) and the authenticity of the coin (1) from the electric signals of the photodetectors (22), which signals are proportional to the intensity of the partial beam (29; 84).

10. Coin verifier according to Claim 9, **characterized in that** the monochromatic light beams (34) from the light source (21) have a wavelength ($\lambda$) from a number of predetermined wavelengths ($\lambda_1$, $\lambda_2$) and **in that** a command of the electronic circuit (25) to the light source (21) determines the wavelength ($\lambda$) of the emitted light beam (34).

11. Method for applying a microscopic relief structure (8) onto a comparatively hard material surface (2; 3) in order to produce a coin (1) according to one of Claims 1 to 4, **characterized in that** the microscopic relief structures (8) are produced by ablation of material by way of exposing the material surface (2; 3) with a laser beam.

12. Method according to Claim 11, **characterized in that** the laser beam passes a mask (42), which determines the form of the microscopic relief structures (8), and then an optical imaging system (44) for demagnification.

13. Method according to Claim 11, **characterized in that** the laser produces a microscopically fine interference pattern with a predetermined spatial frequency f according to the two-beam interference method on the material surface (2; 3) and the material of the surface (2; 3) is ablated at the points of increased intensity in the interference pattern in order to produce the microscopic relief structures (8).

14. Method according to one of Claims 11 to 13, **char-**

**acterized in that** the material surface (2, 3) with the previously produced relief structures (8) is cured by nitration.

**Revendications**

1. Pièce de monnaie (1) avec une surface supérieure (2 ; 3) métallique structurée comportant des reliefs macroscopiques (5) permettant de représenter des motifs, qui servent à indiquer la valeur de la pièce de monnaie et de caractéristique d'identification, avec des surfaces (10 ; 11 ; 12 ; 20) et des champs (14 ; 14') sur la surface supérieure (2 ; 3), qui forment une caractéristique optiquement lisible et qui présentent les structures en relief (8) microscopiquement fines à effet de diffraction,
**caractérisée**
**en ce que** les champs (14 ; 14') sont agencés à des distances radiales (R) prédéfinies du centre de la pièce de monnaie (18), en ce que les structures en relief (8) des champs (14 ; 14') sont des réseaux (13) avec des vecteurs de réseau (79) orientés radialement, en ce que les champs (14 ; 14') forment des groupes, la fréquence spatiale f des structures en relief (8) et la, distance radiale (R) du centre de la pièce de monnaie (18) déterminant l'affectation d'un champ (14 ; 14') à l'un des groupes de champs (14 ; 14'), les groupes de champs (14 ; 14') avec la même distance radiale (R); qui sont affectés à différents groupes, se distinguant par la fréquence spatiale f de la structure en relief (8) et en ce que dans le cas de champs (14 ; 14') du même groupe, la fréquence spatiale f de la structure en relief (8) d'un champ (14 ; 14') est sélectionnée en fonction de la distance radiale (R) du champ (14 ; 14') de telle sorte que dans le cas d'un éclairage de la structure en relief (8) à l'aide d'une source de lumière ponctuelle (21), disposée verticalement au-dessus du centre de la pièce de monnaie (18) à une distance prédéfinie ($h_Q$) avec une lumière monochromatique d'une longueur d'onde ($\lambda$), un des faisceaux partiels (29 ; 84) de la lumière diffractée traverse le centre de la pièce de monnaie (18) à une distance prédéfinie ($h_D$) pour ce groupe.

2. Pièce de monnaie (1) selon la revendication 1, **caractérisée en ce que** les champs (14 ; 14') des structures en relief (8) avec des vecteurs de réseau (79) orientés radialement comportent des surfaces allant de 0,5 mm$^2$ à 10 mm$^2$.

3. Pièce de monnaie (1) selon la revendication 1 ou 2, **caractérisée en ce que** les surfaces (10 ; 11 ; 12) présentant les structures en relief (8) font partie du relief macroscopique (5) et **en ce que** le relief (5) forme avec les surfaces (10 ; 11 ; 12) présentant les structures en relief (8), une caractéristique de sécurité visuellement contrôlable.

4. Pièce de monnaie (1) selon l'une quelconque des revendications 1 à 3, **caractérisée en ce que** dans une surface partielle (20) entourant le centre de la pièce de monnaie (18), les structures en relief (8) forment un réseau (13) avec des sillons rectilignes ou concentriques par rapport au centre.

5. Pièce de monnaie (1) selon l'une quelconque des revendications 1 à 4, **caractérisée en ce que** les structures en relief microscopiques (8) sont agencées sur le fond des évidements (7) réalisés dans la surface supérieure (2 ; 3).

6. Pièce de monnaie (1) selon l'une quelconque des revendications 1 à 5, **caractérisée en ce que** dans les surfaces et les champs (10 ; 11 ; 12 ; 14 ; 14' ; 20), les structures en relief microscopiques (8) sont façonnées directement dans la surface supérieure (2 ; 3).

7. Pièce de monnaie (1) selon l'une quelconque des revendications 1 à 6, **caractérisée en ce que** les structures en relief microscopiques (8) sont recouvertes d'un vernis de protection (9) transparent, remplissant leurs sillons.

8. Pièce de monnaie (1) selon la revendication 5, **caractérisée en ce qu'**une section adaptée d'un stratifié plastique contenant les structures en relief (8) est agencée dans les évidements (7).

9. Appareil de contrôle de pièces de monnaie avec un lecteur (19 ; 36), qui comprend des sources de lumière (21), des photodétecteurs (22) et un circuit électronique (25) relié aux sources de lumière (21) et aux photodétecteurs (22) et est conçu pour le contrôle mécanisé de la caractéristique avec structures en relief (8) d'une pièce de monnaie (1) selon la revendication 1 glissant ou roulant dans un canal de pièces de monnaie (15) sur une surface de roulement (81), **caractérisé en ce qu'**un axe optique (80) du lecteur (19 ; 36) est défini par au moins un photodétecteur (22) et au moins une source de lumière ponctuelle (21), **en ce que** l'axe optique (80) est orienté perpendiculairement à une paroi latérale (16 ; 17) du canal de pièces de monnaie (15) et présente une distance (a) correspondant au rayon de la pièce de monnaie à contrôler (1) par rapport à la surface de roulement (81), **en ce que** la source de lumière (21) est éloignée de la surface supérieure (2 ; 3) de la pièce de monnaie (1) d'une distance ($h_Q$) et chaque photodétecteur (22) est éloigné de la surface supérieure (2 ; 3) de la pièce de monnaie (1) d'une distance ($h_D$) de telle sorte que la lumière monochromatique de longueur d'onde ($\lambda$) émise par la source de lumière (21) est diffractée par au moins une structure en relief (8) de la pièce de monnaie à contrôler (1) sous forme de faisceau partiel (29 ; 84) contre l'axe optique (80) et concentrée sur le photodétecteur (22) prédéfini, agencé à une distance ($h_D$), et **en ce que** le circuit électronique (25) est conçu pour détecter le passage du centre (18) de la pièce de monnaie (1) par l'axe optique (80) et l'authenticité de la pièce de monnaie (1) à partir des signaux électriques des photodétecteurs (22) proportionnels à l'intensité du faisceau partiel (29 ; 84).

10. Appareil de contrôle de pièces de monnaie selon la revendication 9, **caractérisé en ce que** les faisceaux lumineux monochromatiques (34) de la source de lumière (21) présentent une longueur d'onde ($\lambda$) issue d'un certain nombre de longueurs d'ondes ($\lambda 1$, $\lambda 2$) prédéfinies et **en ce qu'**un ordre du circuit électronique (25) à la source de lumière (21) détermine la longueur d'onde ($\lambda$) du faisceau lumineux émis (34).

11. Procédé d'application d'une structure en relief microscopique (8) sur une surface de matière (2, 3) comparativement dure pour la fabrication d'une pièce de monnaie (1) selon l'une quelconque des revendications 1 à 4, **caractérisé en ce que** les structures en relief microscopiques (8) sont générées par enlèvement de matière par exposition de la surface de matière (2, 3) à un rayon laser.

12. Procédé selon la revendication 11, **caractérisé en ce que** le rayon laser passe par un masque (42) déterminant la forme des structures en relief microscopiques (8) puis par un système de reproduction optique (44) de réduction.

13. Procédé selon la revendication 11, **caractérisé en ce que** le laser génère selon la méthode de l'interférence à 2 ondes sur la surface de matière (2 ; 3) un motif d'interférence microscopiquement fin avec une fréquence spatiale f prédéfinie et la matière de la surface supérieure (2 ; 3) est enlevée aux endroits avec une intensité accrue dans le motif d'interférence pour générer les structures en relief microscopiques (8).

14. Procédé selon l'une quelconque des revendications 11 à 13, **caractérisé en ce que** la surface de matière (2, 3) est nitrurée avec les structures en relief (8) produites auparavant.

Fig. 1

Fig. 2

Fig. 3a

Fig. 3b

## Fig. 4

## Fig. 5a

## Fig. 5b

18

Fig. 6a

Fig. 6b

Fig. 9

Fig. 10

# Fig. 7a

# Fig. 7b

# Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4108367 A
- US 5101184 A
- DE 9204029 G
- EP 0105099 B1
- EP 0366858 A1
- EP 105099 B1
- WO 9938039 A
- EP 0694888 B1
- EP 0704825 A1
- EP 401466 A